(19) **Europäisches Patentamt / European Patent Office / Office européen des brevets**

(11) **EP 4 124 146 B1**

(12) **EUROPEAN PATENT SPECIFICATION**

(45) Date of publication and mention
of the grant of the patent:
**23.07.2025 Bulletin 2025/30**

(21) Application number: **20932964.8**

(22) Date of filing: **27.04.2020**

(51) International Patent Classification (IPC):
**H04L 5/00** *(2006.01)*    **H04W 74/0833** *(2024.01)*

(52) Cooperative Patent Classification (CPC):
**H04W 74/0833; H04L 5/0007; H04L 5/0053;**
H04W 74/0836; H04W 74/0838

(86) International application number:
**PCT/CN2020/087225**

(87) International publication number:
**WO 2021/217337 (04.11.2021 Gazette 2021/44)**

(54) **COMMUNICATION METHOD AND COMMUNICATION APPARATUS**

KOMMUNIKATIONSVERFAHREN UND KOMMUNIKATIONSVORRICHTUNG

PROCÉDÉ DE COMMUNICATION ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.01.2023 Bulletin 2023/04**

(73) Proprietor: **Huawei Technologies Co., Ltd.
Shenzhen, Guangdong 518129 (CN)**

(72) Inventors:
• **HUANG, Huang
Shenzhen, Guangdong 518129 (CN)**
• **YAN, Mao
Shenzhen, Guangdong 518129 (CN)**

• **GAO, Kuandong
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(56) References cited:
CN-A- 109 246 831    CN-A- 109 246 831
CN-A- 110 178 440    CN-A- 110 392 443
CN-A- 110 392 443    US-A1- 2017 367 120
US-A1- 2019 274 172    US-A1- 2019 306 832
US-A1- 2020 229 244    US-A1- 2021 036 904

## Description

### TECHNICAL FIELD

This application relates to the communications field, and in particular, to a communication method and a communication apparatus.

### BACKGROUND

In a communication system, to make full use of bandwidth of a channel, an orthogonal frequency division multiplexing (OFDM) technology is used for transmitting a plurality of routes of signals on one channel. For example, in a random access (RA) process, a random access preamble signal may be transmitted by using the OFDM. The random access preamble signal is carried on a physical random access channel (PRACH), where the PRACH is orthogonal to a physical uplink shared channel (PUSCH), and the PUSCH is used to carry a data signal.

In a conventional technology, a cyclic prefix (CP) may be inserted between OFDM symbols, to reduce inter-symbol interference (ISI) and inter-channel interference (ICI) that are caused due to multipath propagation when the OFDM technology is used. Generally, a larger multipath delay indicates that a longer cyclic prefix is required. Two cyclic prefix formats of a data signal are defined in new radio (NR): a normal cyclic prefix (NCP) with a short time length and an extended cyclic prefix (ECP) with a long time length.

However, in a current NR definition, a CP used in a random access preamble signal is in an NCP format with a short time length in a data signal, where the random access preamble signal is aligned with the NCP. However, when an ECP is used in a data signal (for example, when a large subcarrier spacing is used, there is a high probability that the ECP is used), a random access preamble signal is not aligned with the data signal. Consequently, interference between channels carrying the two signals increases, and communication performance is affected.

Document US2017/367120A1 discloses that a network includes a downlink sweeping subframe, an uplink sweeping subframe, a regular sweeping subframe and a processor which is configured to execute the instructions of determining an optimal downlink reception beam from the optimal downlink transmission beam. The processor is further configured to execute the instructions of determining a random access preamble and a physical random access channel (PRACH) resource via resource selection from the optimal downlink transmission beam. The processor is even further configured to execute the instructions of transmitting, to a node, the selected random access preamble via the PRACH resource and an uplink transmission beam of the uplink subframe.

Document CN109246831A discloses a random access method. The method comprises the following steps: a terminal receives first indication information sent by a network equipment, wherein the first indication information is used for indicating a random access configuration index; the terminal determines a random access resource according to the random access configuration index; a random access resource is determined corresponding to the downlink signal according to an association relationship between the random access resource and the downlink signal; according to the random access resource corresponding to the downlink signal, a random access preamble is sent to the network equipment.

Document CN110392443A discloses a data channel transmission method and device, a data channel receiving method and device, which are used for reducing signaling overhead and improving a resource utilization rate, and the scheme comprises the following steps: determining a CP length corresponding to a data channel according to a cyclic prefix CP length corresponding to a random access preamble and a time length corresponding to a cyclic shift interval; transmitting the data channel. The scheme can be applied to a random access process.

Document US2019/274172A1 discloses a method for transmitting a random access channel (RACH). Particularly, the method includes receiving PRACH configuration information including information about a slot (RACH slot) available for transmission of the RACH and information indicating a subcarrier spacing for a PRACH, and transmitting a RACH preamble in the RACH slot on the basis of the PRACH configuration information and the subcarrier spacing, wherein the length of the RACH slot depends on the subcarrier spacing.

### SUMMARY

The independent claims define embodiments of the present invention, with additional features presented in the dependent claims. In the following, it should be noted that certain parts of the description and drawings referring to earlier embodiments may not necessarily include all the features required to implement the claimed invention. Instead, they are provided as examples to aid in understanding the embodiments of the invention.

This application provides a communication method and a communication apparatus, to increase a probability that a terminal device successfully sends a random access preamble in a random access process, and reduce interference between a random access signal and a data signal.

A first aspect of this application provides a communication method. The method includes: In an information exchange process in which a terminal device that does not access a network establishes a connection to the network, that is, in a random access process, the terminal device receives configuration information from a network device. The terminal device further determines, in a first parameter set based on the configuration information, a parameter corresponding to a random access preamble. Then, the terminal sends the random access preamble to the network device based on the parameter corresponding to the random access preamble and the configuration information. Any item of the first parameter set includes at least the parameter corresponding to the random access preamble, to be specific, includes at least a cyclic prefix (CP) length, a subcarrier spacing length, duration of the random access preamble, and duration of a physical random access channel (PRACH) corresponding to the random access preamble. The first parameter set includes one or more of the following items:

the cyclic prefix (CP) length is $1024\kappa \times 2^{-\mu}$ time units, the subcarrier spacing length is $15 \times 2^{-\mu}$ kilohertz kHz, the duration of the random access preamble is $2 \times 2048\kappa \times 2^{-\mu}$ time units, and the duration of the physical random access channel (PRACH) corresponding to the random access preamble is $2 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is $4 \times 2560\kappa \times 2^{-\mu}$ time units;

the CP length is $3072\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is $6 \times 2560\kappa \times 2^{-\mu}$ time units;

the CP length is $768\kappa \times 2^{-\mu}$ time units, the subcarrier spacing length is $15 \times 2^{-\mu}$ kHz, the duration of the random access preamble is $2 \times 2048\kappa \times 2^{-\mu}$ time units, and the duration of the PRACH corresponding to the random access preamble is $2 \times 2560\kappa \times 2^{-\mu}$ time units;

the CP length is $1280\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is $4 \times 2560\kappa \times 2^{-\mu}$ time units;

the CP length is $1792\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is $6 \times 2560\kappa \times 2^{-\mu}$ time units;

the CP length is $3328\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is $12 \times 2560\kappa \times 2^{-\mu}$ time units;

the CP length is $1792\kappa \times 2^{-\mu}$ time units, the subcarrier spacing length is $15 \times 2^{-\mu}$ kHz, the duration of the random access preamble is $1 \times 2048\kappa \times 2^{-\mu}$ time units, and the duration of the PRACH corresponding to the random access preamble is $2 \times 2560\kappa \times 2^{-\mu}$ time units;

the CP length is $3840\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is $6 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is $6 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is $12 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is $6 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is $6 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $13 \times 2048\kappa \times 2^{-\mu}$ time units, and the duration of the PRACH corresponding to the random access preamble is $12 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $5 \times 2048\kappa \times 2^{-\mu}$ time units, and the duration of the PRACH corresponding to the random access preamble is $6 \times 2560\kappa \times 2^{-\mu}$ time units;

the CP length is $3072\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access

preamble is $11 \times 2560\kappa \times 2^{-\mu}$ time units;

the CP length is $2816\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is $10 \times 2560\kappa \times 2^{-\mu}$ time units;

the CP length is $2560\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is $9 \times 2560\kappa \times 2^{-\mu}$ time units;

the CP length is $2304\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is $8 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is $7 \times 2560\kappa \times 2^{-\mu}$ time units;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is $11 \times 2560\kappa \times 2^{-\mu}$ time units;

the CP length is $1792\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is $10 \times 2560\kappa \times 2^{-\mu}$ time units;

the CP length is $1536\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is $9 \times 2560\kappa \times 2^{-\mu}$ time units;

the CP length is $1280\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is $8 \times 2560\kappa \times 2^{-\mu}$ time units; or

the CP length is $1024\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is $7 \times 2560\kappa \times 2^{-\mu}$ time units.

$\kappa$ is a constant, and $\mu$ is a subcarrier spacing index of the PRACH.

In this embodiment, any random access preamble in the first parameter set is aligned with an integer quantity of OFDM symbols with an ECP. When a CP type used for a data format in a data signal is an ECP, a random access preamble signal on a PRACH is aligned with an integer quantity of OFDM data signals on a PUSCH. In this way, a probability that the terminal device successfully sends a message 1 (the random access preamble) in a random access process is increased, an access delay is reduced, and interference between a random access signal and a data signal is reduced.

In a possible implementation of the first aspect of this application, the parameter "the duration of the physical random access channel (PRACH) corresponding to the random access preamble" in any item of the first parameter set may alternatively be represented as a quantity of OFDM symbols. In this case, the first parameter set includes one or more of the following items:

the CP length is $1024\kappa \times 2^{-\mu}$ time units, the subcarrier spacing length is $15 \times 2^{-\mu}$ kilohertz kHz, the duration of the random access preamble is $2 \times 2048\kappa \times 2^{-\mu}$ time units, and the duration of the physical random access channel (PRACH) corresponding to the random access preamble is 2 OFDM symbols;

the CP length is $2048\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is 4 OFDM symbols;

the CP length is $3072\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is 6 OFDM symbols;

the CP length is $768\kappa \times 2^{-\mu}$ time units, the subcarrier spacing length is $15 \times 2^{-\mu}$ kHz, the duration of the random access preamble is $2 \times 2048\kappa \times 2^{-\mu}$ time units, and the duration of the PRACH corresponding to the random access preamble is 2 OFDM symbols;

the CP length is $1280\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is 4 OFDM symbols;

the CP length is $1792\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is 6 OFDM symbols;

the CP length is $3328\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is 12 OFDM symbols;

the CP length is $1792\kappa \times 2^{-\mu}$ time units, the subcarrier spacing length is $15 \times 2^{-\mu}$ kHz, the duration of the random access preamble is $1 \times 2048\kappa \times 2^{-\mu}$ time units, and the duration of the PRACH corresponding to the random access preamble is 2 OFDM symbols;

the CP length is $3840\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $6 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is 12 OFDM symbols;

the CP length is $2048\kappa \times 2^{-\mu}$ time units, the subcarrier spacing length is $15 \times 2^{-\mu}$ kHz, the duration of the random access preamble is $4 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $13 \times 2048\kappa \times 2^{-\mu}$ time units, and the duration of the PRACH corresponding to the random access preamble is 12 OFDM symbols;

the CP length is $2048\kappa \times 2^{-\mu}$ time units, the subcarrier spacing length is $15 \times 2^{-\mu}$ kHz, the duration of the random access preamble is $5 \times 2048\kappa \times 2^{-\mu}$ time units, and the duration of the PRACH corresponding to the random access preamble is 6 OFDM symbols;

the CP length is $3072\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is 11 OFDM symbols;

the CP length is $2816\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is 10 OFDM symbols;

the CP length is $2560\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 9 OFDM symbols;

the CP length is $2304\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 8 OFDM symbols;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is 7 OFDM symbols;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is 11 OFDM symbols;

the CP length is $1792\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is 10 OFDM symbols;

the CP length is $1536\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is 9 OFDM symbols;

the CP length is $1280\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 8 OFDM symbols; or

the CP length is $1024\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 7 OFDM symbols.

The process in which the terminal device determines, in the first parameter set based on the configuration information, the parameter corresponding to the random access preamble includes: When the terminal device determines that a CP type is an extended cyclic prefix (ECP), the terminal device determines, in the first parameter set based on the configuration information, the parameter corresponding to the random access preamble. The random access preamble is aligned with an integer quantity of OFDM symbols with an ECP. Therefore, the terminal device may determine that a CP type used on a PRACH is the extended cyclic prefix (ECP). Alternatively, when the terminal device determines that a CP type used on a PUSCH is the extended cyclic prefix (ECP), the terminal device determines, in the first parameter set, the parameter corresponding to the random access preamble.

In a possible implementation of the first aspect of this application, when the configuration information includes one or more of the following items: the CP length, a preamble sequence length, and the duration of the PRACH corresponding to the random access preamble, the terminal device determines, in the first parameter set based on the configuration information, the parameter corresponding to the random access preamble. The terminal device may obtain a related parameter based on the configuration information (when the configuration information includes one or more of the following items: the CP length, the preamble sequence length, and the duration of the PRACH corresponding to the random access preamble). If the related parameter in this case indicates a specific item in the first parameter set, the terminal device may determine, in the first parameter set based on the related parameter, another parameter corresponding to the random access preamble.

When the configuration information includes a first indication, the terminal device determines that the CP type is the extended cyclic prefix (ECP), where the first indication indicates that a CP type of an initial uplink bandwidth part or an initial downlink bandwidth part is the ECP. In a process in which the terminal device determines that the CP type is the ECP, the configuration information may be used as one basis for determining that the CP type is the ECP. Specifically, the terminal device may perform the determining process based on the first indication carried in the configuration information. The first indication indicates that the CP type of the initial uplink bandwidth part or the initial downlink bandwidth part is the ECP, so that the terminal device may subsequently determine, based on the first indication, that a CP type used for the random access preamble is the ECP (or determine, in the first parameter set, the parameter corresponding to the random access preamble). In this way, when the CP type used for the data format in the data signal is the ECP, the random access preamble signal on the PRACH is aligned with the integer quantity of OFDM data signals on the PUSCH.

In a possible implementation of the first aspect of this application, the configuration information may include one or more of the following items: the CP length, the duration of the random access preamble, and the duration of the PRACH corresponding to the random access preamble. When the configuration information includes one or more parameters of the CP length, the duration of the random access preamble, and the duration of the PRACH corresponding to the random access preamble, the terminal device may determine, in the first parameter set based on the one or more parameters, the parameter corresponding to the random access preamble. In this way, still another implementation of determining the parameter corresponding to the random access preamble is provided, and implementability of the solutions is improved.

In a possible implementation of the first aspect of this application, any item of the first parameter set further includes a format of the random access preamble, and the configuration information further includes a random access configuration index. In this case, that the terminal device determines, in a first parameter set based on the configuration information, a parameter corresponding to a random access preamble includes: The terminal device determines a target format of the random access preamble based on the random access configuration index. Subsequently, the terminal device determines, in the first parameter set based on the target format of the random access preamble, the parameter corresponding to the random access preamble. The any item of the first parameter set further includes the format (FORMAT) of the random access preamble, and the format of the random access preamble is for identifying each item of the first parameter set. The configuration information includes the random access configuration index, and the random access configuration index may correspond to and indicate a target format of a random access preamble carried in a specified item of the first parameter set. Further, the terminal device may determine, in the first parameter set based on the target format of the random access preamble, the parameter corresponding to the random access preamble, to determine, in the first parameter set, the parameter corresponding to the random access preamble.

In a possible implementation of the first aspect of this application, the any item of the first parameter set further includes the preamble sequence length. The preamble sequence length is one of the parameters corresponding to the random access preamble. Therefore, the terminal device may determine, in the first parameter set, more comprehensive parameters corresponding to the random access preamble, to further improve the probability that the terminal device successfully sends the message 1 (the random access preamble) in the random access process.

In a possible implementation of the first aspect of this application, a value of the preamble sequence length is 139, 127, 571, 1151, or another specified length, so that the preamble sequence length is implemented in a plurality of manners.

In a possible implementation of the first aspect of this application, the preamble sequence length may have a plurality of possible values. When the any item of the first parameter set includes the preamble sequence length and the format (FORMAT) of the random access preamble, the format of the random access preamble may also identify a preamble sequence length in each item of the first parameter set because the format of the random access preamble is for identifying each item of the first parameter set. In this way, the terminal device may determine the preamble sequence length based on the format of the random access preamble.

In a possible implementation of the first aspect of this application, the terminal device may receive a second indication from the network device. Further, the terminal device determines the preamble sequence length based on the second indication. The preamble sequence length may have a plurality of possible values. The network device may indicate a specific value of the preamble sequence length to the terminal device by using the second indication, so that the terminal device may determine the preamble sequence length based on the second indication. In addition, the second indication may be included in the configuration information, or may be included in another message sent by the network device to the terminal device. This is not limited herein.

In a possible implementation of the first aspect of this application, $\kappa$ is a constant, and a value of $\kappa$ may be specifically 64, 128, 256, 512, or another value, so that the parameter corresponding to the random access preamble is flexibly configured. In addition, the value of $\kappa$ may be associated with a reference time unit or a time granularity used for the random access preamble, for example, may be a value obtained by dividing an LTE sampling rate $T_s$ ($T_s$ = 1/(15000 $\times$ 2048) seconds) by the reference time unit (or the time granularity) $T_g$ used for the random access preamble. Alternatively, the value of $\kappa$ is determined in another manner. This is not limited herein.

In a possible implementation of the first aspect of this application, a value of $\mu$ is associated with one or more of the following items: a carrier frequency of the random access preamble, a random access type, or a frequency type used for the random access preamble. $\mu$ is the subcarrier spacing index of the PRACH. The value of $\mu$ is specifically associated with one or more of the carrier frequency of the random access preamble, the random access type, and the frequency type used for the random access preamble. In other words, a specific value of $\mu$ may be determined based on parameters such as the carrier frequency of the random access preamble, the random access type, and the frequency type used for the random access preamble, so that the value of $\mu$ is implemented in a plurality of manners.

A second aspect of this application provides a communication apparatus. The communication apparatus has a function of implementing the method according to any one of the first aspect or the possible implementations of the first aspect. The function may be implemented by hardware, or may be implemented by hardware executing corresponding software. The hardware or the software includes one or more modules corresponding to the foregoing function, for example, a transceiver unit and a processing unit.

A third non-claimed aspect of this application provides a communication apparatus. The communication apparatus includes at least one processor, a memory, and computer-executable instructions that are stored in the memory and that can be run on the processor. When the computer-executable instructions are executed by the processor, the processor performs the method according to any one of the first aspect or the possible implementations of the first aspect.

A fourth aspect of this application provides a computer-readable storage medium, where the computer-readable storage medium includes a computer program or instructions. When the computer-executable instructions are executed by a processor, the processor performs the method according to any one of the first aspect or the possible implementations of the first aspect.

A fifth aspect of this application provides a computer program product that stores one or more computer-executable instructions, where the computer program product includes a computer program or instructions. When the computer-executable instructions are executed by a processor, the processor performs the method according to any one of the first aspect or the possible implementations of the first aspect.

A sixth non-claimed aspect of this application provides a chip system. The chip system includes a processor and a communication interface. The processor may include an application processor and a baseband processor (BP). For example, the processor may further include an application processor (AP), configured to support a communication apparatus in implementing the function according to any one of the first aspect or the possible implementations of the first aspect. In a possible design, the chip system may further include a memory. The memory is configured to store a necessary computer program or necessary instructions. The processor executes the computer program or instructions in the memory through the communication interface, to implement the method according to any one of the first aspect or the possible implementations of the first aspect. In addition, the chip system may include a chip, or may include a chip and another discrete component.

A seventh aspect of this application provides a communication system. The communication system includes a network device that is configured to send configuration information, and the communication apparatus according to any one of the second aspect or the possible implementations of the second aspect. Alternatively, the communication system includes a network device and the communication apparatus according to any one of the third aspect or the possible implementations of the third aspect.

For technical effects brought by any one of the second aspect to the seventh aspect or the possible implementations of the second aspect to the seventh aspect, refer to the technical effects brought by the first aspect or the different possible implementations of the first aspect. Details are not described herein again.

It can be learned from the foregoing technical solutions that this application has the following advantages.

According to the method, a terminal device receives configuration information from a network device. The terminal device determines, in a first parameter set based on the configuration information, a parameter corresponding to a random access preamble. The terminal sends the random access preamble to the network device based on the parameter corresponding to the random access preamble and the configuration information. The random access preamble is aligned with an integer quantity of OFDM symbols with an ECP. Therefore, when a CP type used for a data format in a data signal is an ECP, a random access preamble signal on a PRACH is enabled to be aligned with an integer quantity of OFDM data signals on a PUSCH. In this way, a probability that the terminal device successfully sends a message 1 (the random access preamble) in a random access process is increased, an access delay is reduced, and interference between a random access signal and a data signal is reduced.

## BRIEF DESCRIPTION OF DRAWINGS

FIG. 1 is a schematic diagram of a network architecture according to an embodiment of this application;
FIG. 2 is a schematic diagram of a terminal device according to an embodiment of this application;
FIG. 3 is a schematic diagram of a network device according to an embodiment of this application;
FIG. 4 is a schematic diagram of a random access process according to an embodiment of this application;
FIG. 5 is a schematic diagram of an embodiment of a communication method according to an embodiment of this application;
FIG. 6 is a schematic diagram of an embodiment of a communication apparatus according to an embodiment of this application; and
FIG. 7 is another schematic diagram of an embodiment of a communication apparatus according to an embodiment of this application.

## DESCRIPTION OF EMBODIMENTS

The following clearly and completely describes the technical solutions in embodiments of this application with reference to the accompanying drawings in embodiments of this application.

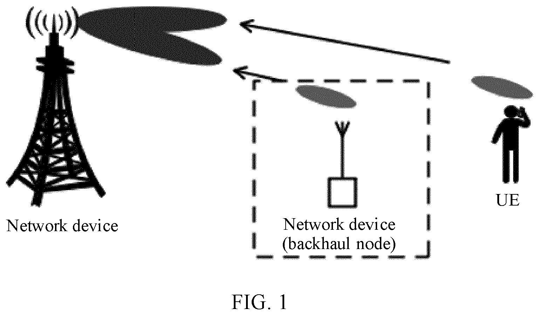

A network architecture in this application is shown in FIG. 1, and includes one or more network devices (where a network device in a dashed box not only serves as a backhaul node, but also serves as a node that provides access for a terminal device (UE), that is, integrated access and backhaul), and one or more terminal devices. The architecture is similar to a network (which is also referred to as a radio access network) architecture in a new radio (NR) access technology or a long term evolution (LTE) access technology. In the communication system architecture shown in FIG. 1, the dashed box represents an optional device, that is, the network device (the backhaul node) in the dashed box exists in an integrated access and backhaul scenario. The device may serve as a network node that provides a network for UE, or may be a backhaul, to be specific, may serve as a parent network node for the UE to perform access.

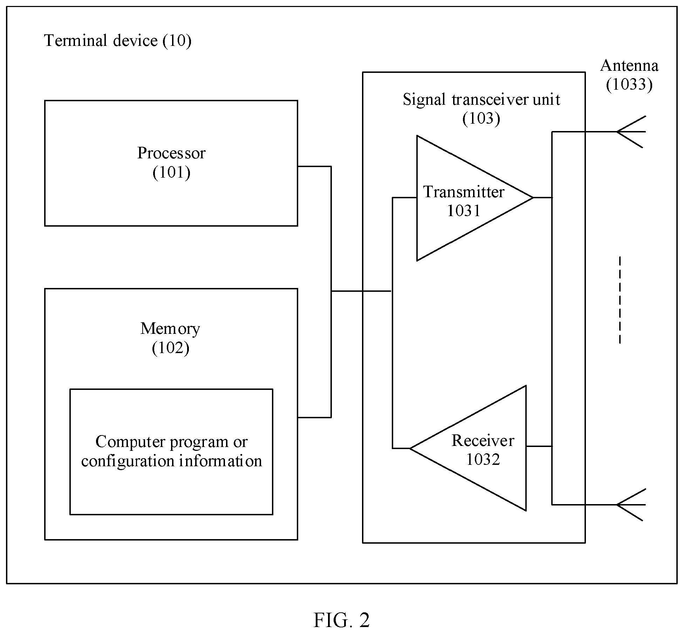

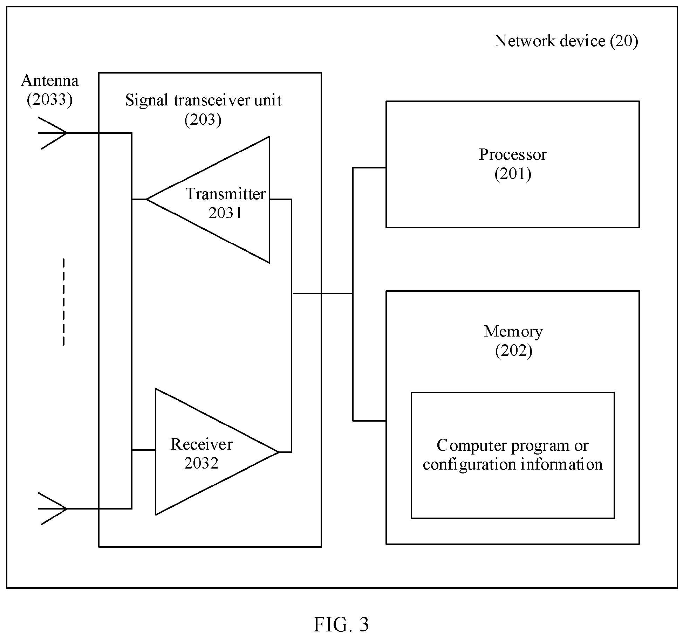

In the network architecture corresponding to FIG. 1, a hardware structure of a related device includes a terminal device and a network device. FIG. 2 and FIG. 3 are respectively schematic diagrams of hardware structures implemented by a terminal device and a network device. As shown in FIG. 2, a terminal device 10 includes a processor 101, a memory 102, and a signal transceiver unit 103. The signal transceiver unit 103 includes a transmitter 1031, a receiver 1032, and an antenna 1033. As shown in FIG. 3, a network device 20 includes a processor 201, a memory 202, and a signal transceiver unit 203. The signal transceiver unit 203 includes a transmitter 2031, a receiver 2032, and an antenna 2033. The receiver 1032 may be configured to receive transmission control information through the antenna 1033, and the transmitter 1031 may be configured to send transmission information to the network device 20 through the antenna 1033. The transmitter 2031 may be configured to send transmission control configuration information to the terminal device 10 through the antenna 2033, and the receiver 2032 may be configured to receive, through the antenna 2033, the transmission information sent by the terminal device 10.

In addition, during macro implementation of the terminal device and the network device shown in FIG. 2 and FIG. 3, the network device may be an apparatus that is deployed in a radio access network to provide a wireless communication function for the terminal device. For example, the network device may include various forms of macro base stations, micro base stations (which is also referred to as small cells), relay stations, access points, and the like. In addition, the network device may alternatively be a base station device in a 5G network. Alternatively, the network device may be a wearable device or a vehicle-mounted device, or the network device may be a transmission reception point (TRP). The terminal device in embodiments of this application may include various handheld devices, vehicle-mounted devices, wearable devices, or computing devices that have a wireless communication function, or other processing devices connected to a wireless modem. The terminal may be a mobile station (MS), a subscriber unit (subscriber unit), a cellular phone (cellular phone), a smartphone (smartphone), a wireless data card, a personal digital assistant (PDA for short) computer, a tablet computer, a wireless modem (modem), a handheld device (handset), a laptop computer (laptop computer), a machine type communication (MTC) terminal, or the like.

In the foregoing network architecture, the network architecture may be specifically used to implement a random access process between the terminal device and the network device. The following describes some terms related to the random access process in embodiments of this application.

Random access (RA): The random access is an information exchange mechanism (or process) for establishing a connection between a network and a device that does not access the network in an LTE or 5G communication system with access control. There are two types of random access: contention-based random access and contention-free random access. The contention-based random access is usually divided into four steps, where each step corresponds to one message, including a message 1, a message 2, a message 3, and a message 4, which respectively carry different signaling or information. The contention-free random access includes only the first two steps. In addition, to reduce access time of the four-step contention-based random access, there is further two-step random access. In the two-step random access, there are a message A and a message B. The message A includes a preamble and the first piece of data information (which are, for example, similar to the message 1 and the message 3 in the four-step random access). The message B includes contention resolution and uplink scheduling (which are, for example, similar to the message 2 and the message 4 in the four-step random access).

Message 1 (Msg 1): The message 1 is a random access preamble (preamble or sequence), and is carried on a physical random access channel (PRACH). In other words, a random access signal corresponding to the random access preamble is sent on a random access time-frequency resource. The time-frequency resource for sending the random access preamble is also referred to as a random access occasion (PRACH occasion). At a physical layer, the message 1 is also referred to as a PRACH signal or a PRACH. The message 1 is usually used to initiate a connection request, a handover request, a synchronization request, or a scheduling request between a device and a network.

Message 2 (Msg 2): The message 2 is also referred to as a random access response (RAR) message. The message 2 is a response from a network side to a received message 1, and one message 2 may respond to a plurality of Msgs 1. If the network side receives the message 1, the network side encapsulates and sends at least one piece of the following information: an index (RAPID) of the message 1, an uplink scheduling grant (uplink grant), a timing advance (timing advance), a temporary cell radio network temporary identifier (TC-RNTI), and the like. The network side may respond to the plurality of Msgs 1 in a same Msg 2.

Message 3 (Msg 3): The message 3 is also referred to as the first uplink scheduling transmission, and is scheduled and transmitted by using an uplink resource UL grant in the message 2, or is scheduled and retransmitted by using downlink control information (DCI) that is scrambled by using a TC-RNTI. Content transmitted in the Msg 3 is a higher layer message, for example, a connection establishment request message (which may be specifically identification information of a user initiating a connection request). This message is used for contention resolution. If a plurality of different devices use a same Msg 1 for random access, a Msg 3 and a Msg 4 may be used together to determine whether a conflict occurs. The Msg 3 may be defined as a message transmitted on a UL-SCH (uplink shared channel) containing a C-RNTI MAC (Medium access control) CE (control element) or a CCCH (Common Control Channel) SDU (Service Data Unit), submitted from an upper layer and associated with a UE Contention Resolution Identity, as part of a random access procedure. Transmission of the message 3 includes retransmission and power control (in other words, there is power control information in a UL grant for scheduling initial transmission or retransmission).

Message 4 (Msg 4): The message 4 is used for contention resolution. The CCCH SDU carried in the message 3 is usually included. If a device detects, in a message 4, a CCCH SDU sent by the device, the device considers that contention-based random access succeeds, and continues to perform a subsequent communication process. The message 4 may be retransmitted, to be specific, there is a corresponding physical uplink control channel (PUCCH) for transmitting feedback information (which indicates whether the message 4 is successfully detected), where transmit power of the PUCCH is controlled by a base station.

Beam: The beam is a communication resource. A technology for forming a beam may be a beamforming technology or another technical means. The beamforming technology may be specifically a digital beamforming technology, an analog beamforming technology, or a hybrid digital/analog beamforming technology. Different beams may be embodied as different resources. Same information or different information may be sent by using different beams. Optionally, a plurality of beams having a same communication feature or similar communication features may be considered as one beam. One beam may include one or more antenna ports, configured to transmit a data channel, a control channel, a sounding signal, and the like. A beam has specific spatial directivity or a spatial feature. For example, a transmit beam may refer to signal strength distribution formed in different directions in space after a signal is transmitted through an antenna. A receive beam may refer to signal strength distribution in different directions in space of a radio signal received through an antenna. It may be understood that the one or more antenna ports included in the beam may also be considered as an antenna port set. The beam may alternatively be embodied as a spatial filter (spatial filter) in a protocol. For example, the transmit beam is a spatial domain transmission filter (spatial domain transmission filter), and the receive beam is a spatial domain receiver filter (spatial domain receiver filter). That the transmit beam is the same as the receive beam may mean that spatial filtering used for sending is the same as spatial filtering used for receiving.

Message: The message is a type of upper-layer data packet in a radio access network, and includes a data message and a control message. At a physical layer, a message is carried on a physical channel and propagated through an antenna in a form of a physical signal. Therefore, for a same data message or control message, both an upper-layer name "message" and a physical-layer name "signal" or "channel" may be used.

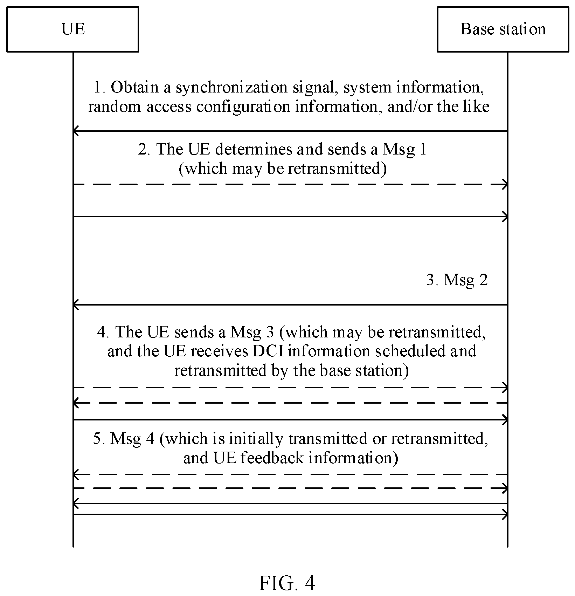

Herein, an example in which a random access process is implemented in 5G NR is used for description. Refer to FIG. 4. The random access process mainly includes the following several steps.

1. A base station sends a synchronization signal and system information at a specific location (in a broadcast manner). In NR, the synchronization signal sent by the base station is a synchronization signal/physical broadcast channel block (SS/PBCH block), which is also referred to as a synchronization signal block. The SS/PBCH block and the system information are periodically sent by the base station based on a configuration. After UE is powered on or when UE needs to re-access a network, the UE performs detection on the synchronization signal of the base station, performs downlink time and frequency synchronization, and receives configuration information related to a random access resource in the system information.

2. The UE selects a specific random access resource based on the random access resource configuration information, where the resource includes a time-frequency resource and a code domain resource (a random access preamble); and sends a random access signal by using the random access resource, where the random access signal is also referred to as a message 1 (Msg 1).

3. After receiving the message 1 sent by the UE, the base station estimates a timing advance of the UE based on the preamble sent by a user, and returns a message 2 (Msg 2) to the user. The message 2 includes configuration information such as a time-frequency resource location and a modulation and coding scheme that are used by the UE to send a message 3 (Msg 3) for performing conflict resolution.

4. After receiving the message 2, the UE sends the message 3 on a corresponding time-frequency resource based on the configuration in the message 2.

5. After receiving the message 3, the base station returns a message 4 (Msg 4) to the user, indicating that the terminal user successfully performs access.

A process from the Msg 1 to the Msg 4 is usually referred to as a four-step random access process. In addition, sending of the random access preamble in the Msg 1 may be further applied to contention-free random access and two-step random access. The contention-free random access includes only the first two steps concerning the Msg 1 and the Msg 2. In addition, there is the two-step random access, where a message A and a message B are included. The message A includes a random access preamble and the first piece of data information (which are, for example, similar to the message 1 and the message 3 in the four-step random access). The message B includes contention resolution and uplink scheduling (which are, for example, similar to the message 2 and the message 4 in the four-step random access). The Msg 1, the Msg 3, and the Msg 4 may be retransmitted (after a failure occurs).

The following describes a process (for example, the step 2 corresponding to FIG. 4) in which UE sends a random access preamble. To make full use of bandwidth of a channel, in a random access process, a random access preamble signal may be transmitted by using OFDM. The random access preamble signal is carried on a PRACH. When data is transmitted by using the OFDM technology, inter-symbol interference (ISI) and/or inter-subcarrier interference (ICI) that are caused due to multipath propagation may be eliminated by inserting a cyclic prefix between OFDM symbols. Generally, a larger multipath delay indicates that a longer cyclic prefix is required.

Generally, for the random access preamble carried on the PRACH, a format of the random access preamble is determined by the following five parts: a preamble sequence length, a subcarrier spacing, a cyclic prefix, duration (or a sequence time length), and a guard interval (or a total time length of the random access preamble, where either of the two is selected). In the 3rd generation partnership project (3GPP) NR protocol TS 38.211, the following parameters are clearly defined: a preamble sequence length, a subcarrier spacing, a cyclic prefix, duration (or a sequence time length), a guard interval, and a total time length of a random access preamble. The parameter "total time length of a random access preamble" is not defined in the same table as the other parameters, and is referred to as PRACH duration in NR. Specifically, as shown in Table 1 and Table 2, random access preamble formats corresponding to two different types of preamble sequence lengths are defined in NR. In Table 1, a random access preamble whose preamble sequence length $L_{RA} = 839$ has four formats. In Table 2, a random access preamble whose preamble sequence length $L_{RA} = 139$ has nine formats.

**Table 1 (Preamble sequence length $L_{RA}$ = 839, and subcarrier spacing $\Delta f^{RA} \in \{1.25, 5\}$ kHz)**

| Format | $L_{RA}$ | $\Delta f^{RA}$ | $N_u$ | $N_{CP}^{RA}$ | Support for restricted sets |
|---|---|---|---|---|---|
| 0 | 839 | 1.25 kHz | $24576\kappa$ | $3168\kappa$ | Type A, Type B |
| 1 | 839 | 1.25 kHz | $2 \cdot 24576\kappa$ | $21024\kappa$ | Type A, Type B |
| 2 | 839 | 1.25 kHz | $4 \cdot 24576\kappa$ | $4688\kappa$ | Type A, Type B |
| 3 | 839 | 5 kHz | $4 \cdot 6144\kappa$ | $3168\kappa$ | Type A, Type B |

**Table 2 (Preamble sequence length $L_{RA}$ = 139, and subcarrier spacing $\Delta f^{RA} = 15 \cdot 2^{\mu}$ kHz)**

| Format | $L_{RA}$ | $\Delta f^{RA}$ | $N_u$ | $N_{CP}^{RA}$ | Support for restricted sets |
|---|---|---|---|---|---|
| A1 | 139 | $15 \cdot 2^{\mu}$ kHz | $2 \cdot 2048\kappa \cdot 2^{-\mu}$ | $288\kappa \cdot 2^{-\mu}$ | - |
| A2 | 139 | $15 \cdot 2^{\mu}$ kHz | $4 \cdot 2048\kappa \cdot 2^{-\mu}$ | $576\kappa \cdot 2^{-\mu}$ | - |
| A3 | 139 | $15 \cdot 2^{\mu}$ kHz | $6 \cdot 2048\kappa \cdot 2^{-\mu}$ | $864\kappa \cdot 2^{-\mu}$ | - |
| B1 | 139 | $15 \cdot 2^{\mu}$ kHz | $2 \cdot 2048\kappa \cdot 2^{-\mu}$ | $216\kappa \cdot 2^{-\mu}$ | - |
| B2 | 139 | $15 \cdot 2^{\mu}$ kHz | $4 \cdot 2048\kappa \cdot 2^{-\mu}$ | $360\kappa \cdot 2^{-\mu}$ | - |
| B3 | 139 | $15 \cdot 2^{\mu}$ kHz | $6 \cdot 2048\kappa \cdot 2^{-\mu}$ | $504\kappa \cdot 2^{-\mu}$ | - |
| B4 | 139 | $15 \cdot 2^{\mu}$ kHz | $12 \cdot 2048\kappa \cdot 2^{-\mu}$ | $936\kappa \cdot 2^{-\mu}$ | - |
| C0 | 139 | $15 \cdot 2^{\mu}$ kHz | $2048\kappa \cdot 2^{-\mu}$ | $1240\kappa \cdot 2^{-\mu}$ | - |
| C2 | 139 | $15 \cdot 2^{\mu}$ kHz | $4 \cdot 2048\kappa \cdot 2^{-\mu}$ | $2048\kappa \cdot 2^{-\mu}$ | |

In Table 1 and Table 2, "Format" is a format identifier of the random access preamble; $\mu \in \{0, 1, 2, 3\}$ is a preamble format subcarrier spacing index; $\kappa = 64$ is an expansion factor, and $\kappa$ is a value obtained by dividing an LTE sampling rate $T_s$ ($T_s = 1/(15000 \times 2048)$ seconds) by an NR reference sampling rate $T_c$ ($T_c = 1/(48000 \times 4096)$ seconds); $\Delta f^{RA}$ is a subcarrier spacing in the random access preamble; $N_u$ is duration of the random access preamble (which is represented by a quantity of reference time sampling points, and is also referred to as a time length of a random access sequence); and $N_{CP}^{RA}$ is a cyclic prefix length of the random access preamble.

A data signal carried on a PUSCH includes a data symbol and a cyclic prefix. A length of the data symbol is $2048\kappa \cdot 2^{-\mu}$. Usually, a cyclic prefix format may be used, which includes a normal cyclic prefix (NCP) and an extended cyclic prefix (ECP). In a slot corresponding to the normal cyclic prefix, there are 14 OFDM symbols, which have two types of cyclic prefix lengths $144\kappa \cdot 2^{-\mu}$ and $144\kappa \cdot 2^{-\mu} + 16\kappa$, where OFDM symbols with the cyclic prefix length of $144\kappa \cdot 2^{-\mu}$ have a larger quantity. There are 12 OFDM symbols in a slot corresponding to the extended cyclic prefix, where a cyclic prefix length of each OFDM symbol is the same, and is $512\kappa \cdot 2^{-\mu}$. For descriptions of a time unit and symbols $\kappa$ and $\mu$, refer to the content in Table 1 and Table 2.

Generally, a larger multipath delay indicates that a cyclic prefix for eliminating the multipath delay is longer. For example, when a carrier frequency band above 52.6 GHz needs to be used, or a large subcarrier width needs to be used, or an OFDM symbol with a shorter slot length needs to be used, the ECP may be used in the data signal to eliminate the multipath delay and avoid interference between OFDM symbols. Alternatively, the ECP may be used to facilitate beam switching between OFDM symbols, so that a longer switching delay is tolerated and signal impairment is avoided.

It can be learned from the column to which the cyclic prefix length of the random access preamble belongs in Table 1 and Table 2 that, in a current NR definition, a CP used in a random access preamble signal is in an NCP format with a short time length in a data signal, where the random access preamble signal is aligned with the NCP. However, when an ECP is used for a data signal, if the existing random access preamble format is used, a random access preamble signal in a slot is always not aligned with the data signal. Consequently, interference between the two signals increases, and communication performance is affected.

To resolve the foregoing problem, embodiments of this application provide a communication method and a communication apparatus, to optimize a process in which a terminal device sends a random access preamble to a network device.

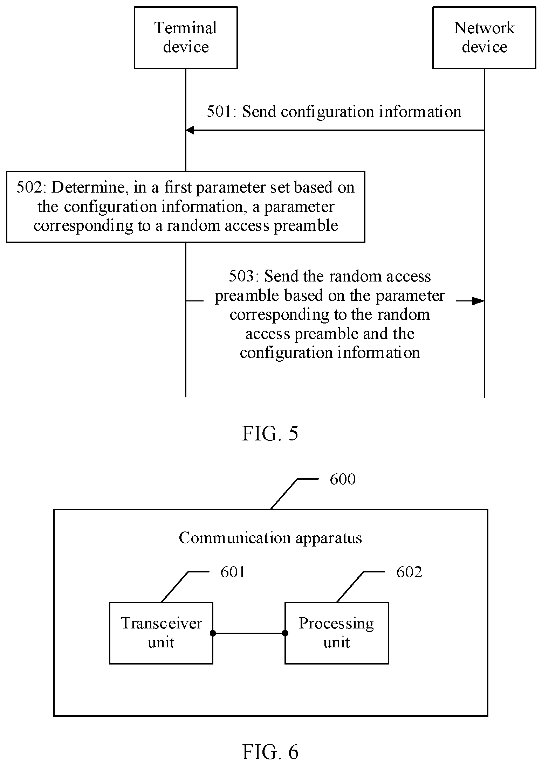

FIG. 5 is a schematic diagram of a communication method according to an embodiment of this application.

501: A network device sends configuration information to a terminal device.

In this embodiment, the network device periodically sends the configuration information. After being powered on or when needing to re-access a network, the terminal device may perform detection on a synchronization signal/broadcast signal from the network device, perform downlink time and frequency synchronization, and receive a system information block from the network device, to obtain the configuration information required for random access. The configuration information may be carried in the synchronization signal/broadcast signal (for example, a synchronization signal/PBCH block, (SS/PBCH block)) and/or the system information block (SIB) sent by the network device.

In an implementation, the configuration information may include random access time, a frequency resource parameter, and the like, and specifically includes at least one of the following parameters: PRACH time configuration information (for example, a PRACH configuration index (prach-ConfigIndex)), a quantity of random access occasions of frequency division multiplexing (for example, message 1 frequency division multiplexing (msg1-FDM)), a random access root sequence index, a subcarrier spacing of a random access preamble (or a subcarrier spacing of a physical random access channel, or a subcarrier index), and the like.

In an optional implementation, the configuration information may further include a first parameter, where the first parameter includes at least one of the following parameters: a CP length of the random access preamble, a sequence length of the random access preamble, duration of a PRACH corresponding to the random access preamble, a guard time of the random access preamble, and a quantity of OFDM symbols for which the random access preamble lasts.

In an optional implementation, the configuration information may further include cyclic prefix (cyclic Prefix) indication information. The cyclic prefix indication information indicates, to the terminal device, that a CP type used for sending a message to the network device is an ECP. When the network device needs to use a carrier frequency band above 52.6 GHz, a large subcarrier width, or an OFDM symbol with a shorter time length, or there is another scenario in which the ECP needs to be used, the network device may send, in step 501, the configuration information including the cyclic prefix indication information.

In addition, the cyclic prefix indication information may include a cyclic prefix field (namely, a first indication). The cyclic prefix field is used to indicate that a cyclic prefix of the random access preamble is the extended cyclic prefix (ECP). Alternatively, the cyclic prefix field is used to indicate that a cyclic prefix of a PUSCH is the extended cyclic prefix (ECP). Alternatively, the cyclic prefix field is used to indicate that a cyclic prefix of an uplink bandwidth part (bandwidth part) is the extended cyclic prefix (ECP). Alternatively, the cyclic prefix field is used to indicate that a cyclic prefix of an initial uplink bandwidth part (initial uplink bandwidth part) is the extended cyclic prefix (ECP). Alternatively, the cyclic prefix field is used to indicate that a cyclic prefix of an initial downlink bandwidth part (initial downlink bandwidth part) is the extended cyclic prefix (ECP).

In an optional implementation, the configuration information sent by the network device to the terminal device in step 501 may include a second indication. The second indication may indicate a value of a preamble sequence length in a parameter corresponding to the random access preamble. For example, the second indication may indicate that the value of the preamble sequence length is 139, 127, 571, 1151, or another specified time length. In addition, the second indication may be included in the configuration information, or may be included in another message sent by the network device to the terminal device. This is not limited herein.

In an optional implementation, the configuration information sent by the network device to the terminal device in step 501 may include a specified format of the random access preamble (namely, a target format of the random access preamble). The format of the random access preamble is for identifying the parameter corresponding to the random access preamble. To be specific, the format of the random access preamble may be implemented in a plurality of manners. For example, different formats of the random access preamble are identified by using different numbers (for example, 1, 2, and 3), different letters (for example, A, B, and C), or different combinations of a letter and a number, or different formats of the random access preamble are identified in another manner. This is not limited herein.

502: The terminal device determines, in a first parameter set based on the configuration information, the parameter corresponding to the random access preamble.

In this embodiment, the terminal device may determine, in the first parameter set based on the configuration information, the parameter corresponding to the random access preamble. Any item of the first parameter set includes at least the parameter corresponding to the random access preamble. The parameter corresponding to the random access preamble includes at least the cyclic prefix (CP) length, the subcarrier spacing, duration of the random access preamble, and the duration of the physical random access channel (PRACH) corresponding to the random access preamble.

In an optional implementation, the configuration information obtained by the terminal device in step 501 may further include the first parameter. In step 502, the terminal device may determine, in the first parameter set based on the first parameter, the parameter corresponding to the random access preamble. Optionally, in step 502, when the terminal device determines that the first parameter indicates a specific item of the first parameter set, the terminal device further determines, in the first parameter set based on the first parameter, the parameter corresponding to the random access preamble.

In an optional implementation, any item of the first parameter set further includes the format (FORMAT) of the random access preamble, where the format of the random access preamble is for identifying the parameter corresponding to each item of the first parameter set. After obtaining, in step 501, the configuration information that includes the random access configuration index (prach-ConfigIndex), the terminal device may determine, based on the random access configuration index, the target format of the random access preamble corresponding to the random access configuration index. Subsequently, if a format of the random access preamble in the any item of the first parameter set includes the target format of the random access preamble, the terminal device further determines, in the first parameter set based on the target format of the random access preamble, the parameter corresponding to the random access preamble. In other words, in the first parameter set, the terminal device determines, as the parameter corresponding to the random access preamble, a parameter of a specified item identified by the target format of the random access preamble.

In addition, in another optional implementation, the configuration information sent by the network device to the terminal device in step 501 may include the specified format of the random access preamble (namely, the target format of the random access preamble). Subsequently, if a format of the random access preamble in the any item of the first parameter set includes the target format of the random access preamble, the terminal device determines, in the first parameter set based on the target format of the random access preamble, the parameter corresponding to the random access preamble. In other words, in the first parameter set, the terminal device determines, as the parameter corresponding to the random access preamble, a parameter of a specified item identified by the target format of the random access preamble.

In an optional implementation, the terminal device may obtain the second indication in the configuration information received from the network device in step 501. The second indication may indicate the value of the preamble sequence length in the parameter corresponding to the random access preamble. For example, the second indication may indicate that the value of the preamble sequence length is 139, 127, 571, 1151, or another specified time length. Subsequently, the terminal device may determine the preamble sequence length based on the second indication. In addition, the second indication may be included in the configuration information, or may be included in another message sent by the network device to the terminal device. This is not limited herein.

In another optional implementation, the preamble sequence length may have a plurality of possible values. Optionally, the any item of the first parameter set includes the format (FORMAT) of the random access preamble. The format of the random access preamble is for identifying each item of the first parameter set. Therefore, the format of the random access preamble may also be for identifying the preamble sequence length in each item of the first parameter set. In this way, the terminal device may determine the preamble sequence length based on the format of the random access preamble.

In an optional implementation, the configuration information obtained by the terminal device in step 501 includes the cyclic prefix indication information. The terminal device further determines, based on the cyclic prefix indication information, at least one of the following parameters of the random access preamble: the cyclic prefix length, the duration of the PRACH corresponding to the random access preamble, the guard time of the random access preamble, and the quantity of OFDM symbols for which the random access preamble lasts. Subsequently, the terminal device determines, in the first parameter set based on the obtained parameter, the parameter corresponding to the random access preamble.

In an optional implementation, the configuration information obtained by the terminal device in step 501 may include the random access configuration index (prach-ConfigIndex) and the cyclic prefix indication information. The terminal device determines the format (Format) of the random access preamble based on the random access configuration index, and further determines, based on the cyclic prefix indication information, that a parameter set for sending the random access preamble is the first parameter set. Subsequently, the terminal device determines, in the first parameter set based on the format of the random access preamble, the parameter corresponding to the random access preamble.

In an optional implementation, the random access preamble has a plurality of parameter sets, for example, the first parameter set and a second parameter set. The first parameter set is used in a first scenario, and the second parameter set is used in a second scenario. For example, the first scenario may include a scenario in which the terminal device uses a carrier frequency band above 52.6 GHz, or the terminal device uses a large subcarrier width, or the terminal device uses an OFDM symbol with a shorter time length, or may include another scenario in which the terminal device needs to use an ECP. The second scenario may include a scenario in which the terminal device uses a carrier frequency band below 52.6 GHz, or the terminal device uses a small subcarrier width, or the terminal device uses an OFDM symbol with a longer time length, or may include another scenario in which the terminal device needs to use an NCP. To be specific, the terminal device may determine a parameter set for use based on a carrier frequency, or determine a parameter set for use based on the cyclic prefix indication information included in the configuration information obtained in step 501, or determine a parameter set for use in another manner. This is not limited herein. In addition, an implementation of the second parameter set may be the parameter set in Table 1 or Table 2, or another parameter set. This is not limited herein.

The following describes the first parameter set in detail. The first parameter set includes one or more parameters corresponding to the random access preamble. Each parameter corresponding to the random access preamble includes at least one of the following items: the cyclic prefix (CP) length, the subcarrier spacing length, the duration of the random access preamble, and the duration of the physical random access channel (PRACH) corresponding to the random access preamble. The first parameter set may be implemented in a plurality of manners, which are separately described below.

Manner 1: Refer to Table 3. The any item of the first parameter set corresponds to any row in Table 3. Accordingly, the first parameter set may include any one or more rows in Table 3. In the any row in Table 3, data (Format, $L_{RA}$, $\Delta f^{RA}$, $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 3 into a same table. Alternatively, the first parameter set may be implemented by separately integrating the data in the different columns into two different tables (for example, a first table includes the data in the columns such as Format, $L_{RA}$, $\Delta f^{RA}$, $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 3**

| Format | $L_{RA}$ | $\Delta f^{RA}$ | $N_u$ | $N_{CP}^{RA}$ | $N_{dur}^{RA}$, **PRACH duration** |
|---|---|---|---|---|---|
| A1 | N | $15 \cdot 2^\mu$ kHz | $2 \cdot 2048\kappa \cdot 2^{-\mu}$ | $1024\kappa \cdot 2^{-\mu}$ | $2 \cdot 2560\kappa \cdot 2^{-\mu}$ |
| A2 | N | $15 \cdot 2^\mu$ kHz | $4 \cdot 2048\kappa \cdot 2^{-\mu}$ | $2048\kappa \cdot 2^{-\mu}$ | $4 \cdot 2560\kappa \cdot 2^{-\mu}$ |
| A3 | N | $15 \cdot 2^\mu$ kHz | $6 \cdot 2048\kappa \cdot 2^{-\mu}$ | $3072\kappa \cdot 2^{-\mu}$ | $6 \cdot 2560\kappa \cdot 2^{-\mu}$ |
| B1 | N | $15 \cdot 2^\mu$ kHz | $2 \cdot 2048\kappa \cdot 2^{-\mu}$ | $768\kappa \cdot 2^{-\mu}$ | $2 \cdot 2560\kappa \cdot 2^{-\mu}$ |
| B2 | N | $15 \cdot 2^\mu$ kHz | $4 \cdot 2048\kappa \cdot 2^{-\mu}$ | $1280\kappa \cdot 2^{-\mu}$ | $4 \cdot 2560\kappa \cdot 2^{-\mu}$ |
| B3 | N | $15 \cdot 2^\mu$ kHz | $6 \cdot 2048\kappa \cdot 2^{-\mu}$ | $1792\kappa \cdot 2^{-\mu}$ | $6 \cdot 2560\kappa \cdot 2^{-\mu}$ |
| B4 | N | $15 \cdot 2^\mu$ kHz | $12 \cdot 2048\kappa \cdot 2^{-\mu}$ | $3328\kappa \cdot 2^{-\mu}$ | $12 \cdot 2560\kappa \cdot 2^{-\mu}$ |
| C0 | N | $15 \cdot 2^\mu$ kHz | $2048\kappa \cdot 2^{-\mu}$ | $1792\kappa \cdot 2^{-\mu}$ | $2 \cdot 2560\kappa \cdot 2^{-\mu}$ |
| C2 | N | $15 \cdot 2^\mu$ kHz | $4 \cdot 2048\kappa \cdot 2^{-\mu}$ | $3840\kappa \cdot 2^{-\mu}$ | $6 \cdot 2560\kappa \cdot 2^{-\mu}$ |

In Table 3, N is the random access preamble sequence length, for example, *N=139,* N=127, N=571, N=1151, or *N* is another value. $\Delta f^{RA} = 15 \cdot 2^\mu$ kHz is the subcarrier spacing of the random access preamble. $N_u$ is the duration (or a sequence time length) of the random access preamble. $N_{CP}^{RA}$ is the cyclic prefix length of the random access preamble. $\kappa$ is a constant, and a value of $\kappa$ may be specifically 64, 128, 256, 512, or another value, so that the parameter corresponding to the random access preamble is flexibly configured. In addition, the symbol "·" represents a multiplication sign. $\mu$ is a subcarrier spacing index of the PRACH.

In a possible implementation, in Table 3, the format (namely, the column in which Format is located) of the random access preamble may be implemented in a plurality of manners. For example, different formats of the random access preamble are identified by using different numbers (for example, 1, 2, and 3), different letters (for example, A, B, and C), or different combinations of a letter and a number (for example, A1, A2, A3, B1, B2, B3, B4, C0, and C2 in Table 3), or different formats of the random access preamble are identified in another manner. This is not limited herein.

In a possible implementation, in Table 3, a reference time unit (time unit) (or a time granularity (time granularity)) used by the random access preamble (for example, time parameters $N_u$ and $N_{CP}^{RA}$) is $T_g$, $\kappa$ is a constant, and is related to the reference time unit (or the time granularity) $T_g$. Specifically, $\kappa$ may be a value obtained by dividing an LTE sampling rate $T_s$ ($T_s$ = 1/(15000 × 2048) seconds) by the reference time unit (or the time granularity) $T_g$ used by the random access preamble. For example, if $T_g$ = 1/(480 · 1000 · 4096) seconds, $\kappa$ = 64; if $T_g$ = 1/(960 · 1000 · 4096) seconds, $\kappa$ = 128; if $T_g$ = 1/(1920 · 1000 · 4096) seconds, $\kappa$ = 256; if $T_g$ = 1/(3840 · 1000 · 4096) seconds, $\kappa$ = 512, ; or if $T_g$ = 1/(7680 · 1000 · 4096) seconds, $\kappa$ = 1024. Alternatively, another value is used for implementation. This is not limited herein.

In a possible implementation, in Table 3, $\mu$ is an index corresponding to the subcarrier spacing. For example, $\mu \in$ {0,1, 2, 3, 4, 5, 6, 7, 8}. In addition, a value of $\mu$ may be larger. Examples are not listed one by one herein. It should be understood that a final value set of $\mu$ is related to a frequency of a carrier, a random access type, and a frequency type used for random access (for example, a licensed (licensed) frequency band or an unlicensed (unlicensed) frequency band). Detailed descriptions are provided in the following.

1. In an implementation, the value set of $\mu$ is related to the frequency (or a frequency range) of the carrier.

Table 3-1 is a schematic table of implementation of the frequency range. In Table 3-1, for example, four levels of frequency ranges are included, and the four levels of frequency ranges are respectively FR1, FR2, FRm, and FRn. For example, when the frequency range is FRm, the value set of $\mu$ is $\mu \in \{1, 2\}$; or the value set of $\mu$ is $\mu \in \{0, 1, 2\}$; or the value set of $\mu$ is $\mu \in \{1, 2, 3\}$. When the frequency range is FRn, the value set of $\mu$ is $\mu \in \{5, 6\}$; or the value set of $\mu$ is $\mu \in \{4, 5, 6\}$; or the value set of $\mu$ is $\mu \in \{3, 4, 5\}$. It is clear that descriptions herein are an example, and specific implementation of $\mu$ is not limited thereto.

**Table 3-1**

| Frequency range designation | Corresponding frequency range |
|---|---|
| FR1 | 410 MHz - 7125 MHz |
| FR2 | 24250 MHz - 52600 MHz |
| FRm | X1 MHz - X2 MHz |
| FRn | Y1 MHz - Y2 MHz |

It should be noted that specific values of X1, X2, Y1, and Y2 in Table 3-1 are not limited in this embodiment of this application. For example, X1 and X2 may be less than or equal to 24250. For example, X1 is 10000, and X2 is 16000. For example, Y1 and Y2 may be greater than or equal to 52600. For example, Y1 is 52600, and Y2 is 65000. For another example, Y1 is 65000, and Y2 is 85000.

2. In an implementation, the value set of $\mu$ is related to the random access type.

The random access type may include one or more of two-step random access and four-step random access. For example, the frequency range is FRm. When the random access is the two-step random access, $\mu \in \{1, 2\}$ is used; or when the random access is the four-step random access, the value set of $\mu$ is $\mu \in \{0, 1, 2\}$. Alternatively, when the frequency range is FRn, and the random access is the two-step random access, the value set of $\mu$ is $\mu \in \{5, 6\}$; or when the random access is the four-step random access, the value set of $\mu$ is $\mu \in \{4, 5, 6\}$. It is clear that descriptions herein are an example, and the specific implementation of $\mu$ is not limited thereto.

3. In an implementation, the value set of $\mu$ is related to the frequency type (for example, the licensed (licensed) frequency band or the unlicensed (unlicensed) frequency band) used for the random access.

The random access frequency range may include one or more of FR1, FR2, FRm, and FRn. For example, the frequency range is FRm. When the random access is performed on the licensed frequency band in FRm, $\mu \in \{1, 2\}$ is used; or when the random access is performed on the unlicensed frequency band in FRm, the value set of $\mu$ is $\mu \in \{0,1, 2\}$. Alternatively, when the frequency range is FRn, and the random access is performed on the licensed frequency band in FRn, the value set of $\mu$ is $\mu \in \{5, 6\}$; or when the random access is performed on the unlicensed frequency band in FRn, the value set of $\mu$ is $\mu \in \{4, 5, 6\}$. It is clear that descriptions herein are an example, and the specific implementation of $\mu$ is not limited thereto.

In addition, A1, A2, A3, B1, B2, B3, B4, C0, and C2 in the foregoing Format are merely examples of code names or aliases of the format, and may be replaced with any other names. For example, another name is D1, D2, D3, E1, E2, E3, E4, F0, F2, or another code name or alias. This is not limited herein.

A unit of each parameter in the last column in Table 3 may alternatively be represented as a quantity of OFDM symbols. For details, refer to Table 4. The any item of the first parameter set corresponds to any row in Table 4. Accordingly, the first parameter set may include any one or more rows in Table 4.

**Table 4**

| Format | $L_{RA}$ | $\Delta f^{RA}$ | $N_u$ | $N_{CP}^{RA}$ | $N_{dur}^{RA}$ , PRACH duration |
|---|---|---|---|---|---|
| A1 | N | $15 \cdot 2^\mu$ kHz | $2 \cdot 2048\kappa \cdot 2^{-\mu}$ | $1024\kappa \cdot 2^{-\mu}$ | 2 |
| A2 | N | $15 \cdot 2^\mu$ kHz | $4 \cdot 2048\kappa \cdot 2^{-\mu}$ | $2048\kappa \cdot 2^{-\mu}$ | 4 |
| A3 | N | $15 \cdot 2^\mu$ kHz | $6 \cdot 2048\kappa \cdot 2^{-\mu}$ | $3072\kappa \cdot 2^{-\mu}$ | 6 |
| B1 | N | $15 \cdot 2^\mu$ kHz | $2 \cdot 2048\kappa \cdot 2^{-\mu}$ | $768\kappa \cdot 2^{-\mu}$ | 2 |
| B2 | N | $15 \cdot 2^\mu$ kHz | $4 \cdot 2048\kappa \cdot 2^{-\mu}$ | $1280\kappa \cdot 2^{-\mu}$ | 4 |
| B3 | N | $15 \cdot 2^\mu$ kHz | $6 \cdot 2048\kappa \cdot 2^{-\mu}$ | $1792\kappa \cdot 2^{-\mu}$ | 6 |
| B4 | N | $15 \cdot 2^\mu$ kHz | $12 \cdot 2048\kappa \cdot 2^{-\mu}$ | $3328\kappa \cdot 2^{-\mu}$ | 12 |
| C0 | N | $15 \cdot 2^\mu$ kHz | $2048\kappa \cdot 2^{-\mu}$ | $1792\kappa \cdot 2^{-\mu}$ | 2 |

(continued)

| Format | $L_{RA}$ | $\Delta f^{RA}$ | $N_u$ | $N_{CP}^{RA}$ | $N_{dur}^{RA}$ , PRACH duration |
|---|---|---|---|---|---|
| C2 | N | $15 \cdot 2^\mu$ kHz | $4 \cdot 2048\kappa \cdot 2^{-\mu}$ | $3840\kappa \cdot 2^{-\mu}$ | 6 |

In Table 4, for definitions of the symbols and parameters, refer to the content in Table 3. Details are not described herein again. In the any row in Table 4, data (Format, $L_{RA}$, $\Delta f^{RA}$, $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 4 into a same table. Alternatively, the first parameter set may be implemented by separately integrating the data in the different columns into two different tables (for example, a first table includes the data in the columns such as Format, $L_{RA}$, $\Delta f^{RA}$, $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

In Manner 1 in which the first parameter set is implemented, a total time length of the random access preamble is an integer quantity of OFDM symbols with an extended cyclic prefix, so that a data signal on a PUSCH and a random access preamble signal on a PRACH may be synchronized as much as possible, and mutual interference is reduced. The cyclic prefix length of the random access preamble is greater than a guard interval by a cyclic prefix length of the data signal, which helps protect data that is after the random access preamble, and avoids interference on subsequent data transmission, where the interference is caused by a PRACH signal due to a multipath delay on a channel. A total time period of a random access preamble in one slot does not exceed 12 OFDM symbols. Therefore, the PRACH does not cross a plurality of slots. This facilitates flexible scheduling.

Manner 2: Refer to Table 5. The any item of the first parameter set corresponds to any row in Table 5. Accordingly, the first parameter set may include any one or more rows in Table 5. In the any row in Table 5, data (Format, $L_{RA}$, $\Delta f^{RA}$, $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 5 into a same table. Alternatively, the first parameter set may be implemented by separately integrating the data in the different columns into two different tables (for example, a first table includes the data in the columns such as Format, $L_{RA}$, $\Delta f^{RA}$, $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 5**

| Format | $L_{RA}$ | $\Delta f^{RA}$ | $N_u$ | $N_{CP}^{RA}$ | $N_{dur}^{RA}$ , PRACH duration |
|---|---|---|---|---|---|
| A1 | N | $15 \cdot 2^\mu$ kHz | $2 \cdot 2048\kappa \cdot 2^{-\mu}$ | $1024\kappa \cdot 2^{-\mu}$ | $2 \cdot 2560\kappa \cdot 2^{-\mu}$ |
| A2 | N | $15 \cdot 2^\mu$ kHz | $4 \cdot 2048\kappa \cdot 2^{-\mu}$ | $2048\kappa \cdot 2^{-\mu}$ | $4 \cdot 2560\kappa \cdot 2^{-\mu}$ |
| A3 | N | $15 \cdot 2^\mu$ kHz | $6 \cdot 2048\kappa \cdot 2^{-\mu}$ | $2048\kappa \cdot 2^{-\mu}$ | $6 \cdot 2560\kappa \cdot 2^{-\mu}$ |
| B1 | N | $15 \cdot 2^\mu$ kHz | $2 \cdot 2048\kappa \cdot 2^{-\mu}$ | $768\kappa \cdot 2^{-\mu}$ | $2 \cdot 2560\kappa \cdot 2^{-\mu}$ |
| B2 | N | $15 \cdot 2^\mu$ kHz | $4 \cdot 2048\kappa \cdot 2^{-\mu}$ | $1280\kappa \cdot 2^{-\mu}$ | $4 \cdot 2560\kappa \cdot 2^{-\mu}$ |
| B3 | N | $15 \cdot 2^\mu$ kHz | $6 \cdot 2048\kappa \cdot 2^{-\mu}$ | $1792\kappa \cdot 2^{-\mu}$ | $6 \cdot 2560\kappa \cdot 2^{-\mu}$ |
| B4 | N | $15 \cdot 2^\mu$ kHz | $12 \cdot 2048\kappa \cdot 2^{-\mu}$ | $2048\kappa \cdot 2^{-\mu}$ | $12 \cdot 2560\kappa \cdot 2^{-\mu}$ |
| C0 | N | $15 \cdot 2^\mu$ kHz | $2048\kappa \cdot 2^{-\mu}$ | $1792\kappa \cdot 2^{-\mu}$ | $2 \cdot 2560\kappa \cdot 2^{-\mu}$ |
| C2 | N | $15 \cdot 2^\mu$ kHz | $4 \cdot 2048\kappa \cdot 2^{-\mu}$ | $2048\kappa \cdot 2^{-\mu}$ | $6 \cdot 2560\kappa \cdot 2^{-\mu}$ |

A unit of each parameter in the last column in Table 5 may alternatively be represented as a quantity of OFDM symbols. For details, refer to Table 6. The any item of the first parameter set corresponds to any row in Table 6. Accordingly, the first parameter set may include any one or more rows in Table 6. In the any row in Table 6, data (Format, $L_{RA}$, $\Delta f^{RA}$ $N_u$,

$N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 6 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 6**

| Format | $L_{RA}$ | $\Delta f^{RA}$ | $N_u$ | $N_{CP}^{RA}$ | $N_{dur}^{RA}$, PRACH duration |
|--------|----------|-----------------|-------|---------------|--------------------------------|
| A1 | N | $15 \cdot 2^{\mu}$ kHz | $2 \cdot 2048\kappa \cdot 2^{-\mu}$ | $1024\kappa \cdot 2^{-\mu}$ | 2 |
| A2 | N | $15 \cdot 2^{\mu}$ kHz | $4 \cdot 2048\kappa \cdot 2^{-\mu}$ | $2048\kappa \cdot 2^{-\mu}$ | 4 |
| A3 | N | $15 \cdot 2^{\mu}$ kHz | $6 \cdot 2048\kappa \cdot 2^{-\mu}$ | $2048\kappa \cdot 2^{-\mu}$ | 6 |
| B1 | N | $15 \cdot 2^{\mu}$ kHz | $2 \cdot 2048\kappa \cdot 2^{-\mu}$ | $768\kappa \cdot 2^{-\mu}$ | 2 |
| B2 | N | $15 \cdot 2^{\mu}$ kHz | $4 \cdot 2048\kappa \cdot 2^{-\mu}$ | $1280\kappa \cdot 2^{-\mu}$ | 4 |
| B3 | N | $15 \cdot 2^{\mu}$ kHz | $6 \cdot 2048\kappa \cdot 2^{-\mu}$ | $1792\kappa \cdot 2^{-\mu}$ | 6 |
| B4 | N | $15 \cdot 2^{\mu}$ kHz | $12 \cdot 2048\kappa \cdot 2^{-\mu}$ | $2048\kappa \cdot 2^{-\mu}$ | 12 |
| C0 | N | $15 \cdot 2^{\mu}$ kHz | $2048\kappa \cdot 2^{-\mu}$ | $1792\kappa \cdot 2^{-\mu}$ | 2 |
| C2 | N | $15 \cdot 2^{\mu}$ kHz | $4 \cdot 2048\kappa \cdot 2^{-\mu}$ | $2048\kappa \cdot 2^{-\mu}$ | 6 |

In Table 5 and Table 6, for definitions of the symbols and parameters, refer to the content in Table 3. Details are not described herein again.

In Manner 2 in which the first parameter set is implemented, a total time length of the random access preamble is an integer quantity of OFDM symbols with an extended cyclic prefix, so that a data signal on a PUSCH and a random access preamble signal on a PRACH may be synchronized as much as possible, and mutual interference is reduced. A total time period of a random access preamble in one slot does not exceed 12 OFDM symbols. Therefore, the PRACH may not cross a plurality of slots. This facilitates flexible scheduling. Compared with that in Manner 1, cyclic prefix lengths in some formats (A3/B4/C2) are reduced in Manner 2, so that the cyclic prefix length of the random access preamble does not exceed a time length of one OFDM symbol, and a cyclic prefix does not need to be carried across a plurality of OFDM symbols.

Manner 3: Refer to Table 7. The any item of the first parameter set corresponds to any row in Table 7. Accordingly, the first parameter set may include any one or more rows in Table 7. In the any row in Table 7, data (Format, $L_{RA}$, $\Delta f^{RA}$ $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 7 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 7**

| Format | $L_{RA}$ | $\Delta f^{RA}$ | $N_u$ | $N_{CP}^{RA}$ | $N_{dur}^{RA}$, PRACH duration |
|--------|----------|-----------------|-------|---------------|-------------------------------|
| A1 | N | $15 \cdot 2^\mu$ kHz | $2 \cdot 2048\kappa \cdot 2^{-\mu}$ | $1024\kappa \cdot 2^{-\mu}$ | $2 \cdot 2560\kappa \cdot 2^{-\mu}$ |
| A2 | N | $15 \cdot 2^\mu$ kHz | $4 \cdot 2048\kappa \cdot 2^{-\mu}$ | $2048\kappa \cdot 2^{-\mu}$ | $4 \cdot 2560\kappa \cdot 2^{-\mu}$ |
| A3 | N | $15 \cdot 2^\mu$ kHz | $7 \cdot 2048\kappa \cdot 2^{-\mu}$ | $1024\kappa \cdot 2^{-\mu}$ | $6 \cdot 2560\kappa \cdot 2^{-\mu}$ |
| B1 | N | $15 \cdot 2^\mu$ kHz | $2 \cdot 2048\kappa \cdot 2^{-\mu}$ | $768\kappa \cdot 2^{-\mu}$ | $2 \cdot 2560\kappa \cdot 2^{-\mu}$ |
| B2 | N | $15 \cdot 2^\mu$ kHz | $4 \cdot 2048\kappa \cdot 2^{-\mu}$ | $1280\kappa \cdot 2^{-\mu}$ | $4 \cdot 2560\kappa \cdot 2^{-\mu}$ |
| B3 | N | $15 \cdot 2^\mu$ kHz | $6 \cdot 2048\kappa \cdot 2^{-\mu}$ | $1792\kappa \cdot 2^{-\mu}$ | $6 \cdot 2560\kappa \cdot 2^{-\mu}$ |
| B4 | N | $15 \cdot 2^\mu$ kHz | $13 \cdot 2048\kappa \cdot 2^{-\mu}$ | $2048\kappa \cdot 2^{-\mu}$ | $12 \cdot 2560\kappa \cdot 2^{-\mu}$ |
| C0 | N | $15 \cdot 2^\mu$ kHz | $2048\kappa \cdot 2^{-\mu}$ | $1792\kappa \cdot 2^{-\mu}$ | $2 \cdot 2560\kappa \cdot 2^{-\mu}$ |
| C2 | N | $15 \cdot 2^\mu$ kHz | $5 \cdot 2048\kappa \cdot 2^{-\mu}$ | $2048\kappa \cdot 2^{-\mu}$ | $6 \cdot 2560\kappa \cdot 2^{-\mu}$ |

A unit of each parameter in the last column in Table 7 may alternatively be represented as a quantity of OFDM symbols. For details, refer to Table 8. The any item of the first parameter set corresponds to any row in Table 8. Accordingly, the first parameter set may include any one or more rows in Table 8. In the any row in Table 8, data (Format, $L_{RA}$, $\Delta f^{RA}$, $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 8 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 8**

| Format | $L_{RA}$ | $\Delta f^{RA}$ | $N_u$ | $N_{CP}^{RA}$ | $N_{dur}^{RA}$, PRACH duration |
|--------|----------|-----------------|-------|---------------|-------------------------------|
| A1 | N | $15 \cdot 2^\mu$ kHz | $2 \cdot 2048\kappa \cdot 2^{-\mu}$ | $1024\kappa \cdot 2^{-\mu}$ | 2 |
| A2 | N | $15 \cdot 2^\mu$ kHz | $4 \cdot 2048\kappa \cdot 2^{-\mu}$ | $2048\kappa \cdot 2^{-\mu}$ | 4 |
| A3 | N | $15 \cdot 2^\mu$ kHz | $7 \cdot 2048\kappa \cdot 2^{-\mu}$ | $2048\kappa \cdot 2^{-\mu}$ | 6 |
| B1 | N | $15 \cdot 2^\mu$ kHz | $2 \cdot 2048\kappa \cdot 2^{-\mu}$ | $768\kappa \cdot 2^{-\mu}$ | 2 |
| B2 | N | $15 \cdot 2^\mu$ kHz | $4 \cdot 2048\kappa \cdot 2^{-\mu}$ | $1280\kappa \cdot 2^{-\mu}$ | 4 |
| B3 | N | $15 \cdot 2^\mu$ kHz | $6 \cdot 2048\kappa \cdot 2^{-\mu}$ | $1792\kappa \cdot 2^{-\mu}$ | 6 |
| B4 | N | $15 \cdot 2^\mu$ kHz | $13 \cdot 2048\kappa \cdot 2^{-\mu}$ | $2048\kappa \cdot 2^{-\mu}$ | 12 |
| C0 | N | $15 \cdot 2^\mu$ kHz | $2048\kappa \cdot 2^{-\mu}$ | $1792\kappa \cdot 2^{-\mu}$ | 2 |
| C2 | N | $15 \cdot 2^\mu$ kHz | $5 \cdot 2048\kappa \cdot 2^{-\mu}$ | $2048\kappa \cdot 2^{-\mu}$ | 6 |

In Table 7 and Table 8, for definitions of the symbols and parameters, refer to the content in Table 3. Details are not described herein again.

In Manner 3 in which the first parameter set is implemented, a total time length of the random access preamble is an integer quantity of OFDM symbols with an extended cyclic prefix, so that a data signal on a PUSCH and a random access preamble signal on a PRACH may be synchronized as much as possible, and mutual interference is reduced. The cyclic prefix length of the random access preamble is greater than a guard interval by a cyclic prefix length of the data signal, which helps protect data that is after the random access preamble, and avoids interference on subsequent data transmission, where the interference is caused by a PRACH signal due to a multipath delay on a channel. A total time period of a random access preamble in one slot does not exceed 12 OFDM symbols. Therefore, the PRACH may not cross a plurality of slots. This facilitates flexible scheduling. Compared with that in Manner 1, cyclic prefix lengths in some formats are reduced in Manner 3, so that the cyclic prefix length of the random access preamble does not exceed a time length of one OFDM symbol, and a cyclic prefix does not need to be carried across a plurality of OFDM symbols. Compared with that in Manner 2, the cyclic prefix lengths in some formats are further reduced in Manner 3, and the duration of the random access preamble is increased accordingly, so that the cyclic prefix length of the random access preamble remains unchanged.

Manner 4: Refer to Table 9. The any item of the first parameter set corresponds to any row in Table 9. Accordingly, the first parameter set may include any one or more rows in Table 9. In the any row in Table 9, data (Format, $L_{RA}$, $\Delta f^{RA}$ $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 9 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 9**

| Format | $L_{RA}$ | $\Delta f^{RA}$ | $N_u$ | $N_{CP}^{RA}$ | $N_{dur}^{RA}$, **PRACH duration** |
|---|---|---|---|---|---|
| D1 | N | $15 \cdot 2^{\mu}$ kHz | $11 \cdot 2048\kappa \cdot 2^{-\mu}$ | $3072\kappa \cdot 2^{-\mu}$ | $11 \cdot 2560\kappa \cdot 2^{-\mu}$ |
| D2 | N | $15 \cdot 2^{\mu} kHz$ | $10 \cdot 2048\kappa \cdot 2^{-\mu}$ | $2816\kappa \cdot 2^{-\mu}$ | $10 \cdot 2560\kappa \cdot 2^{-\mu}$ |
| D3 | N | $15 \cdot 2^{\mu} kHz$ | $9 \cdot 2048\kappa \cdot 2^{-\mu}$ | $2560\kappa \cdot 2^{-\mu}$ | $9 \cdot 2560\kappa \cdot 2^{-\mu}$ |
| D4 | N | $15 \cdot 2^{\mu} kHz$ | $8 \cdot 2048\kappa \cdot 2^{-\mu}$ | $2304\kappa \cdot 2^{-\mu}$ | $8 \cdot 2560\kappa \cdot 2^{-\mu}$ |
| D5 | N | $15 \cdot 2^{\mu} kHz$ | $7 \cdot 2048\kappa \cdot 2^{-\mu}$ | $2048\kappa \cdot 2^{-\mu}$ | $7 \cdot 2560\kappa \cdot 2^{-\mu}$ |

A unit of each parameter in the last column in Table 9 may alternatively be represented as a quantity of OFDM symbols. For details, refer to Table 10. The any item of the first parameter set corresponds to any row in Table 10. Accordingly, the first parameter set may include any one or more rows in Table 10. In the any row in Table 10, data (Format, $L_{RA}$, $\Delta f^{RA}$ $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 10 into a same table. Alternatively, the first parameter set may be implemented by separately integrating the data in the different columns into two different tables (for example, a first table includes the data in the columns such as Format, $L_{RA}$, $\Delta f^{RA}$, $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 10**

| Format | $L_{RA}$ | $\Delta f^{RA}$ | $N_u$ | $N_{CP}^{RA}$ | $N_{dur}^{RA}$, **PRACH duration** |
|---|---|---|---|---|---|
| D1 | N | $15 \cdot 2^{\mu}$ kHz | $11 \cdot 2048\kappa \cdot 2^{-\mu}$ | $3072\kappa \cdot 2^{-\mu}$ | 11 |
| D2 | N | $15 \cdot 2^{\mu} kHz$ | $10 \cdot 2048\kappa \cdot 2^{-\mu}$ | $2816\kappa \cdot 2^{-\mu}$ | 10 |
| D3 | N | $15 \cdot 2^{\mu} kHz$ | $9 \cdot 2048\kappa \cdot 2^{-\mu}$ | $2560\kappa \cdot 2^{-\mu}$ | 9 |
| D4 | N | $15 \cdot 2^{\mu} kHz$ | $8 \cdot 2048\kappa \cdot 2^{-\mu}$ | $2304\kappa \cdot 2^{-\mu}$ | 8 |

(continued)

| Format | $L_{RA}$ | $\Delta f^{RA}$ | $N_u$ | $N_{CP}^{RA}$ | $N_{dur}^{RA}$ , PRACH duration |
|---|---|---|---|---|---|
| D5 | N | $15 \cdot 2^\mu kHz$ | $7 \cdot 2048\kappa \cdot 2^{-\mu}$ | $2048\kappa \cdot 2^{-\mu}$ | 7 |

In Table 9 and Table 10, for definitions of the symbols and parameters, refer to the content in Table 3. Details are not described herein again.

In Manner 4 in which the first parameter set is implemented, a total time length of the random access preamble is an integer quantity of OFDM symbols with an extended cyclic prefix, so that a data signal on a PUSCH and a random access preamble signal on a PRACH may be synchronized as much as possible, and mutual interference is reduced. The cyclic prefix length of the random access preamble is greater than a guard interval by a cyclic prefix length of the data signal, which helps protect data that is after the random access preamble, and avoids interference on subsequent data transmission, where the interference is caused by a PRACH signal due to a multipath delay on a channel. A total time period of a random access preamble in one slot does not exceed 11, 10, 9, 8, or 7 OFDM symbols, and some symbol lengths may be reserved for carrying another channel or signal transmission of another function, for example, a physical downlink control channel (PDCCH), uplink/downlink switching, or a sounding reference signal (SRS).

Manner 5: Refer to Table 11. The any item of the first parameter set corresponds to any row in Table 11. Accordingly, the first parameter set may include any one or more rows in Table 11. In the any row in Table 11, data (Format, $L_{RA}$, $\Delta f^{RA}$ $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 11 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 11**

| Format | $L_{RA}$ | $\Delta f^{RA}$ | $N_u$ | $N_{CP}^{RA}$ | $N_{dur}^{RA}$ , PRACH duration |
|---|---|---|---|---|---|
| D1 | N | $15 \cdot 2^\mu$ kHz | $12 \cdot 2048\kappa \cdot 2^{-\mu}$ | $2048\kappa \cdot 2^{-\mu}$ | $11 \cdot 2560\kappa \cdot 2^{-\mu}$ |
| D2 | N | $15 \cdot 2^\mu kHz$ | $11 \cdot 2048\kappa \cdot 2^{-\mu}$ | $1792\kappa \cdot 2^{-\mu}$ | $10 \cdot 2560\kappa \cdot 2^{-\mu}$ |
| D3 | N | $15 \cdot 2^\mu kHz$ | $10 \cdot 2048\kappa \cdot 2^{-\mu}$ | $1536\kappa \cdot 2^{-\mu}$ | $9 \cdot 2560\kappa \cdot 2^{-\mu}$ |
| D4 | N | $15 \cdot 2^\mu kHz$ | $9 \cdot 2048\kappa \cdot 2^{-\mu}$ | $1280\kappa \cdot 2^{-\mu}$ | $8 \cdot 2560\kappa \cdot 2^{-\mu}$ |
| D5 | N | $15 \cdot 2^\mu kHz$ | $8 \cdot 2048\kappa \cdot 2^{-\mu}$ | $1024\kappa \cdot 2^{-\mu}$ | $7 \cdot 2560\kappa \cdot 2^{-\mu}$ |

A unit of each parameter in the last column in Table 11 may alternatively be represented as a quantity of OFDM symbols. For details, refer to Table 12. The any item of the first parameter set corresponds to any row in Table 12. Accordingly, the first parameter set may include any one or more rows in Table 12. In the any row in Table 12, data (Format, $L_{RA}$, $\Delta f^{RA}$ $N_u$, $N_{CP}^{RA}$, and $N_{dur}^{RA}$ PRACH duration) in different columns corresponds to different parameters corresponding to the random access preamble. During specific implementation of the first parameter set, the first parameter set may be implemented in a manner of integrating the data in the different columns in Table 12 into a same table. Alternatively, the first parameter set may be implemented by separately integrating the data in the different columns into two different tables (for example, a first table includes the data in the columns such as Format, $L_{RA}$, $\Delta f^{RA}$ $N_u$, $N_{CP}^{RA}$, and $N_{dur}^{RA}$, and a second table includes the data in the columns such as Format and $N_{dur}^{RA}$ PRACH duration). Alternatively, the first parameter set may be implemented by separately integrating the data in the different columns into more than two different tables. This is not limited herein.

**Table 12**

| Format | $L_{RA}$ | $\Delta f^{RA}$ | $N_u$ | $N_{CP}^{RA}$ | $N_{dur}^{RA}$, PRACH duration |
|---|---|---|---|---|---|
| D1 | N | $15 \cdot 2^{\mu}$ kHz | $12 \cdot 2048\kappa \cdot 2^{-\mu}$ | $2048\kappa \cdot 2^{-\mu}$ | 11 |
| D2 | N | $15 \cdot 2^{\mu} kHz$ | $11 \cdot 2048\kappa \cdot 2^{-\mu}$ | $1792\kappa \cdot 2^{-\mu}$ | 10 |
| D3 | N | $15 \cdot 2^{\mu} kHz$ | $10 \cdot 2048\kappa \cdot 2^{-\mu}$ | $1536\kappa \cdot 2^{-\mu}$ | 9 |
| D4 | N | $15 \cdot 2^{\mu} kHz$ | $9 \cdot 2048\kappa \cdot 2^{-\mu}$ | $1280\kappa \cdot 2^{-\mu}$ | 8 |
| D5 | N | $15 \cdot 2^{\mu} kHz$ | $8 \cdot 2048\kappa \cdot 2^{-\mu}$ | $1024\kappa \cdot 2^{-\mu}$ | 7 |

In Table 11 and Table 12, for definitions of the symbols and parameters, refer to the content in Table 3. Details are not described herein again.

In Manner 5 in which the first parameter set is implemented, a total time length of the random access preamble is an integer quantity of OFDM symbols with an extended cyclic prefix, so that a data signal on a PUSCH and a random access preamble signal on a PRACH may be synchronized as much as possible, and mutual interference is reduced. The cyclic prefix length of the random access preamble does not exceed a time length of one OFDM symbol. Therefore, the PRACH may not cross a plurality of slots. This facilitates flexible scheduling. A total time period of a random access preamble in one slot does not exceed 11, 10, 9, 8, or 7 OFDM symbols, and some symbol lengths may be reserved for carrying another channel or signal transmission of another function, for example, a PDCCH, uplink/downlink switching, or an SRS. Compared with that in Manner 4, cyclic prefix lengths in some formats are reduced in Manner 5, and the duration of the random access preamble is increased accordingly, so that the cyclic prefix length of the random access preamble remains unchanged.

In addition, during specific implementation of the first parameter set, the first parameter set may be prestored by the terminal device in a storage module. The storage module may include a recording medium, a computer memory, a read-only memory (ROM), a random access memory (RAM), a subscriber identity module (SIM), a universal subscriber identity module (USIM), an embedded SIM (eSIM) card, or any storage medium in the terminal device. Alternatively, the terminal device may obtain the first parameter set from a synchronization signal and/or a broadcast signal and/or a system information block that are sent by the network device, or the terminal device may receive a message from another device to obtain the first parameter set. This is not limited herein.

503: The terminal device sends the random access preamble to the network device based on the parameter corresponding to the random access preamble and the configuration information.

In this embodiment, the terminal device may obtain random access time, a frequency resource parameter, and the like of the random access preamble in step 501; and may obtain, in step 502, at least the cyclic prefix (CP) length, the subcarrier spacing length, the duration of the random access preamble, and the duration of the physical random access channel (PRACH) corresponding to the random access preamble that are included in the parameter corresponding to the random access preamble, to send the random access preamble to the network device based on the parameter corresponding to the random access preamble and the configuration information.

In an implementation process of step 503, the network device receives the random access preamble from the terminal device, that is, implements the process of step 2 in FIG. 4. Then, the network device may estimate a timing advance of the terminal device based on the random access preamble, return a message 2 (Msg 2) to the terminal device, and perform the other steps in FIG. 4, to implement a random access process of the terminal device.

In this embodiment, the random access preamble is aligned with an integer quantity of OFDM symbols with an ECP. Therefore, when a CP type used for a data format in a data signal is an ECP, a random access preamble signal on a PRACH is enabled to be aligned with an integer quantity of OFDM data signals on a PUSCH. In this way, a probability that the terminal device successfully sends a message 1 (the random access preamble) in a random access process is increased, an access delay is reduced, and interference between a random access signal and a data signal is reduced.

The foregoing describes the communication method in embodiments of this application. The following describes a communication apparatus provided in embodiments of this application with reference to the accompanying drawings.

Refer to FIG. 6. A communication apparatus 600 according to an embodiment of this application includes a transceiver unit 601 and a processing unit 602.

The transceiver unit 601 is configured to receive configuration information from a network device.

The processing unit 602 is configured to determine, in a first parameter set based on the configuration information, a parameter corresponding to a random access preamble.

The first parameter set includes one or more of the following items:

a cyclic prefix (CP) length is $1024\kappa \times 2^{-\mu}$ time units, a subcarrier spacing length is $15 \times 2^{-\mu}$ kilohertz kHz, duration of the random access preamble is $2 \times 2048\kappa \times 2^{-\mu}$ time units, and duration of a physical random access channel (PRACH) corresponding to the random access preamble is $2 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $768\kappa \times 2^{-\mu}$ time units, a subcarrier spacing length is $15 \times 2^{-\mu}$ kHz, duration of the random access preamble is $2 \times 2048\kappa \times 2^{-\mu}$ time units, and duration of a PRACH corresponding to the random access preamble is $2 \times 2560\kappa \times 2^{-\mu}$ time units;

a CP length is $1280\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $1792\kappa \times 2^{-\mu}$ time units, a subcarrier spacing length is $15 \times 2^{-\mu}$ kHz, a preamble sequence length is $6 \times 2048\kappa \times 2^{-\mu}$ time units, and duration of a PRACH corresponding to the random access preamble is $6 \times 2560\kappa \times 2^{-\mu}$ time units;

a CP length is $3328\kappa \times 2^{-\mu}$ time units, a subcarrier spacing length is $15 \times 2^{-\mu}$ kHz, a preamble sequence length is $12 \times 2048\kappa \times 2^{-\mu}$ time units, and duration of a PRACH corresponding to the random access preamble is $12 \times 2560\kappa \times 2^{-\mu}$ time units;

a CP length is $1792\kappa \times 2^{-\mu}$ time units, a subcarrier spacing length is $15 \times 2^{-\mu}$ kHz, a preamble sequence length is $1 \times 2048\kappa \times 2^{-\mu}$ time units, and duration of a PRACH corresponding to the random access preamble is $2 \times 2560\kappa \times 2^{-\mu}$ time units;

a CP length is $3840\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $13 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $5 \times 2048\kappa \times 2^{-\mu}$ time units, and duration of a PRACH corresponding to the random access preamble is $6 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $11 \times 2048\kappa \times 2^{-\mu}$ time units, and duration of a PRACH corresponding to the random access preamble is $11 \times 2560\kappa \times 2^{-\mu}$ time units;

a CP length is $2816\kappa \times 2^{-\mu}$ time units, a subcarrier spacing length is $15 \times 2^{-\mu}$ kHz, duration of the random access preamble is $10 \times 2048\kappa \times 2^{-\mu}$ time units, and duration of a PRACH corresponding to the random access preamble is $10 \times 2560\kappa \times 2^{-\mu}$ time units;

a CP length is $2560\kappa \times 2^{-\mu}$ time units, a subcarrier spacing length is $15 \times 2^{-\mu}$ kHz, duration of the random access preamble is $9 \times 2048\kappa \times 2^{-\mu}$ time units, and duration of a PRACH corresponding to the random access preamble is $9 \times 2560\kappa \times 2^{-\mu}$ time units;

a CP length is $2304\kappa \times 2^{-\mu}$ time units, a subcarrier spacing length is $15 \times 2^{-\mu}$ kHz, duration of the random access preamble is $8 \times 2048\kappa \times 2^{-\mu}$ time units, and duration of a PRACH corresponding to the random access preamble is $8 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $7$

$\times$ 2560$\kappa$ $\times$ 2$^{-\mu}$ time units;

a CP length is 2048$\kappa$ $\times$ 2$^{-\mu}$ time units, a subcarrier spacing length is 15 $\times$ 2$^{-\mu}$ kHz, duration of the random access preamble is 12 $\times$ 2048$\kappa$ $\times$ 2$^{-\mu}$ time units, and duration of a PRACH corresponding to the random access preamble is 11 $\times$ 2560$\kappa$ $\times$ 2$^{-\mu}$ time units;

a CP length is 1792$\kappa$ $\times$ 2$^{-\mu}$ time units, a subcarrier spacing length is 15 $\times$ 2$^{-\mu}$ kHz, duration of the random access preamble is 11 $\times$ 2048$\kappa$ $\times$ 2$^{-\mu}$ time units, and duration of a PRACH corresponding to the random access preamble is 10 $\times$ 2560$\kappa$ $\times$ 2$^{-\mu}$ time units;

a CP length is 1536$\kappa$ $\times$ 2$^{-\mu}$ time units, a subcarrier spacing length is 15 $\times$ 2$^{-\mu}$ kHz, duration of the random access preamble is 10 $\times$ 2048$\kappa$ $\times$ 2$^{-\mu}$ time units, and duration of a PRACH corresponding to the random access preamble is 9 $\times$ 2560$\kappa$ $\times$ 2$^{-\mu}$ time units;

a CP length is 1280$\kappa$ $\times$ 2$^{-\mu}$ time units, a subcarrier spacing length is 15 $\times$ 2$^{-\mu}$ kHz, duration of the random access preamble is 9 $\times$ 2048$\kappa$ $\times$ 2$^{-\mu}$ time units, and duration of a PRACH corresponding to the random access preamble is 8 $\times$ 2560$\kappa$ $\times$ 2$^{-\mu}$ time units; or

a CP length is 1024$\kappa$ $\times$ 2$^{-\mu}$ time units, a subcarrier spacing length is 15 $\times$ 2$^{-\mu}$ kHz, duration of the random access preamble is 8 $\times$ 2048$\kappa$ $\times$ 2$^{-\mu}$ time units, and duration of a PRACH corresponding to the random access preamble is 7 $\times$ 2560$\kappa$ $\times$ 2$^{-\mu}$ time units.

$\kappa$ is a constant, and $\mu$ is a subcarrier spacing index of the PRACH.

The transceiver unit 601 is configured to send the random access preamble to the network device based on the parameter corresponding to the random access preamble and the configuration information.

In a possible implementation, the parameter "the duration of the physical random access channel (PRACH) corresponding to the random access preamble" in any item of the first parameter set may alternatively be represented as a quantity of OFDM symbols. In this case, the first parameter set includes one or more of the following items:

the CP length is 1024$\kappa$ $\times$ 2$^{-\mu}$ time units, the subcarrier spacing length is 15 $\times$ 2$^{-\mu}$ kilohertz kHz, the duration of the random access preamble is 2 $\times$ 2048$\kappa$ $\times$ 2$^{-\mu}$ time units, and the duration of the physical random access channel (PRACH) corresponding to the random access preamble is 2 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 4 OFDM symbols;

the CP length is 3072$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 768$\kappa$ $\times$ 2$^{-\mu}$ time units, the subcarrier spacing length is 15 $\times$ 2$^{-\mu}$ kHz, the duration of the random access preamble is 2 $\times$ 2048$\kappa$ $\times$ 2$^{-\mu}$ time units, and the duration of the PRACH corresponding to the random access preamble is 2 OFDM symbols;

the CP length is 1280$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 4 OFDM symbols;

the CP length is 1792$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 3328$\kappa$ $\times$ 2$^{-\mu}$ time units, the subcarrier spacing length is 15 $\times$ 2$^{-\mu}$ kHz, the duration of the random access preamble is 12 $\times$ 2048$\kappa$ $\times$ 2$^{-\mu}$ time units, and the duration of the PRACH corresponding to the random access preamble is 12 OFDM symbols;

the CP length is 1792$\kappa$ $\times$ 2$^{-\mu}$ time units, the subcarrier spacing length is 15 $\times$ 2$^{-\mu}$ kHz, the duration of the random access preamble is 1 $\times$ 2048$\kappa$ $\times$ 2$^{-\mu}$ time units, and the duration of the PRACH corresponding to the random access preamble is 2 OFDM symbols;

the CP length is 3840$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 12 $\times$ 2048$\kappa$ $\times$ 2$^{-\mu}$ time units, and the duration of the PRACH corresponding to the random access preamble is 12 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is $4 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is 6 OFDM symbols;

the CP length is $2048\kappa \times 2^{-\mu}$ time units, the subcarrier spacing length is $15 \times 2^{-\mu}$ kHz, the duration of the random access preamble is $13 \times 2048\kappa \times 2^{-\mu}$ time units, and the duration of the PRACH corresponding to the random access preamble is 12 OFDM symbols;

the CP length is $2048\kappa \times 2^{-\mu}$ time units, the subcarrier spacing length is $15 \times 2^{-\mu}$ kHz, the duration of the random access preamble is $5 \times 2048\kappa \times 2^{-\mu}$ time units, and the duration of the PRACH corresponding to the random access preamble is 6 OFDM symbols;

the CP length is $3072\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is 11 OFDM symbols;

the CP length is $2816\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is 10 OFDM symbols;

the CP length is $2560\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 9 OFDM symbols;

the CP length is $2304\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 8 OFDM symbols;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is 7 OFDM symbols;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is 11 OFDM symbols;

the CP length is $1792\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is 10 OFDM symbols;

the CP length is $1536\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is 9 OFDM symbols;

the CP length is $1280\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 8 OFDM symbols; or

the CP length is $1024\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 7 OFDM symbols.

In the claimed implementation, the processing unit 602 is specifically configured to:
when determining that a CP type is an extended cyclic prefix (ECP), determine, in the first parameter set based on the configuration information, the parameter corresponding to the random access preamble.

In the claimed implementation, the processing unit 602 is specifically configured to:
when the configuration information includes a first indication, determine that the CP type is the extended cyclic prefix (ECP), and the first indication indicates that a CP type of an initial uplink bandwidth part or an initial downlink bandwidth part is an ECP.

In a possible implementation, the configuration information includes one or more of the following items: the CP length, the preamble sequence length, and the duration of the PRACH corresponding to the random access preamble.

In a possible implementation, any item of the first parameter set further includes a format of the random access preamble, the configuration information further includes a random access configuration index, and the processing unit 602 is specifically configured to:

determine a target format of the random access preamble based on the random access configuration index; and
determine, in the first parameter set based on the target format of the random access preamble, the parameter corresponding to the random access preamble.

In a possible implementation, the any item of the first parameter set further includes the preamble sequence length.

In a possible implementation, the transceiver unit 601 is further configured to receive a second indication from the network device.

The processing unit is further configured to determine the preamble sequence length based on the second indication.

In a possible implementation, a value of $\kappa$ is 64, 128, 256, or 512.

In a possible implementation, a value of $\mu$ is associated with one or more of the following items:

a carrier frequency of the random access preamble, a random access type, or a frequency type used for the random access preamble.

In this embodiment of this application, the communication apparatus 600 may be implemented as an implementation corresponding to any execution step performed by the terminal device in the foregoing embodiments. An antenna and a radio frequency circuit that have receiving and sending functions may be considered as a transceiver unit of the terminal device, and a processor that has a processing function may be considered as a processing unit of the terminal. As shown in FIG. 6, the communication apparatus 600 (namely, the terminal device) includes the transceiver unit 601 and the processing unit 602. The transceiver unit 601 may also be referred to as a transceiver, a transceiver apparatus, or the like. The processing unit 602 may also be referred to as a processor, a processing board, a processing module, a processing apparatus, or the like. Optionally, a component that is in the transceiver unit 601 and that is configured to implement a receiving function may be considered as a receiving unit, and a component that is in the transceiver unit 601 and that is configured to implement a sending function may be considered as a sending unit. In other words, the transceiver unit 601 includes the receiving unit and the sending unit. The transceiver unit sometimes may also be referred to as a transceiver, a transceiver circuit, or the like. The receiving unit sometimes may also be referred to as a receiver, a receive circuit, or the like. The sending unit sometimes may also be referred to as a transmitter, a transmit circuit, or the like.

It should be understood that the transceiver unit 601 is configured to perform a sending operation and a receiving operation of the terminal device in the foregoing method embodiments, and the processing unit 602 is configured to perform an operation other than the sending operation and the receiving operation of the terminal device in the foregoing method embodiments.

It should be noted that for content such as an execution process of the units of the communication apparatus 600 and a plurality of possible implementations of the different units, refer to the descriptions in the foregoing method embodiments of this application. Details are not described herein again.

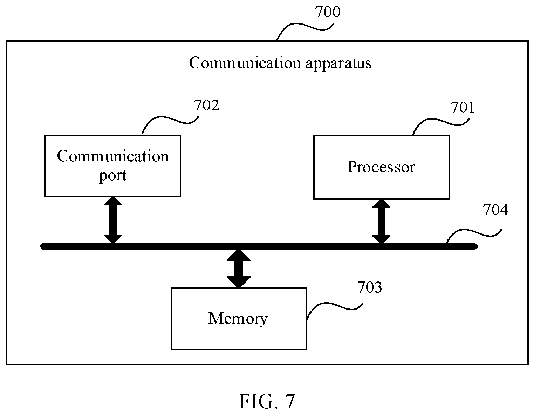

FIG. 7 is a schematic diagram of a possible logical structure of a communication apparatus 700 in the foregoing embodiments according to an embodiment of this application. The communication apparatus 700 may include but is not limited to a processor 701, a communication port 702, a memory 703, and a bus 704. In this embodiment of this application, the processor 701 is configured to perform control processing on an action of the communication apparatus 700.

The processor 701 is configured to perform the communication method according to the foregoing method embodiments. Details are as follows.

The processor 701 receives configuration information from a network device through the communication port 702.

The processor 701 determines, in a first parameter set based on the configuration information, a parameter corresponding to a random access preamble.

The first parameter set includes one or more of the following items:

a cyclic prefix (CP) length is $1024\kappa \times 2^{-\mu}$ time units, a subcarrier spacing length is $15 \times 2^{-\mu}$ kilohertz kHz, duration of the random access preamble is $2 \times 2048\kappa \times 2^{-\mu}$ time units, and duration of a physical random access channel (PRACH) corresponding to the random access preamble is $2 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $768\kappa \times 2^{-\mu}$ time units, a subcarrier spacing length is $15 \times 2^{-\mu}$ kHz, duration of the random access preamble is $2 \times 2048\kappa \times 2^{-\mu}$ time units, and duration of a PRACH corresponding to the random access preamble is $2 \times 2560\kappa \times 2^{-\mu}$ time units;

a CP length is $1280\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access

preamble is $6 \times 2048\kappa \times 2^{-\mu}$ time units, and duration of a PRACH corresponding to the random access preamble is $6 \times 2560\kappa \times 2^{-\mu}$ time units;

a CP length is $3328\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $12 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access preamble is $1 \times 2048\kappa \times 2^{-\mu}$ time units, and duration of a PRACH corresponding to the random access preamble is $2 \times 2560\kappa \times 2^{-\mu}$ time units;

a CP length is $3840\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $13 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $5 \times 2048\kappa \times 2^{-\mu}$ time units, and duration of a PRACH corresponding to the random access preamble is $6 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $11 \times 2048\kappa \times 2^{-\mu}$ time units, and duration of a PRACH corresponding to the random access preamble is $11 \times 2560\kappa \times 2^{-\mu}$ time units;

a CP length is $2816\kappa \times 2^{-\mu}$ time units, a subcarrier spacing length is $15 \times 2^{-\mu}$ kHz, duration of the random access preamble is $10 \times 2048\kappa \times 2^{-\mu}$ time units, and duration of a PRACH corresponding to the random access preamble is $10 \times 2560\kappa \times 2^{-\mu}$ time units;

a CP length is $2560\kappa \times 2^{-\mu}$ time units, a subcarrier spacing length is $15 \times 2^{-\mu}$ kHz, duration of the random access preamble is $9 \times 2048\kappa \times 2^{-\mu}$ time units, and duration of a PRACH corresponding to the random access preamble is $9 \times 2560\kappa \times 2^{-\mu}$ time units;

a CP length is $2304\kappa \times 2^{-\mu}$ time units, a subcarrier spacing length is $15 \times 2^{-\mu}$ kHz, duration of the random access preamble is $8 \times 2048\kappa \times 2^{-\mu}$ time units, and duration of a PRACH corresponding to the random access preamble is $8 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $7 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $11 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access preamble is $11 \times 2048\kappa \times 2^{-\mu}$ time units, and duration of a PRACH corresponding to the random access preamble is $10 \times 2560\kappa \times 2^{-\mu}$ time units;

a CP length is $1536\kappa \times 2^{-\mu}$ time units, a subcarrier spacing length is $15 \times 2^{-\mu}$ kHz, duration of the random access preamble is $10 \times 2048\kappa \times 2^{-\mu}$ time units, and duration of a PRACH corresponding to the random access preamble is $9 \times 2560\kappa \times 2^{-\mu}$ time units;

a CP length is $1280\kappa \times 2^{-\mu}$ time units, a subcarrier spacing length is $15 \times 2^{-\mu}$ kHz, duration of the random access preamble is $9 \times 2048\kappa \times 2^{-\mu}$ time units, and duration of a PRACH corresponding to the random access preamble is $8 \times 2560\kappa \times 2^{-\mu}$ time units; or

a CP length is $1024\kappa \times 2^{-\mu}$ time units, a subcarrier spacing length is $15 \times 2^{-\mu}$ kHz, duration of the random access preamble is $8 \times 2048\kappa \times 2^{-\mu}$ time units, and duration of a PRACH corresponding to the random access preamble is 7

$\times$ 2560$\kappa$ $\times$ 2$^{-\mu}$ time units.

$\kappa$ is a constant, and $\mu$ is a subcarrier spacing index of the PRACH.

The processor 701 sends the random access preamble to the network device through the communication port 702 based on the parameter corresponding to the random access preamble.

In a possible implementation, the parameter "the duration of the physical random access channel (PRACH) corresponding to the random access preamble" in any item of the first parameter set may alternatively be represented as a quantity of OFDM symbols. In this case, the first parameter set includes one or more of the following items:

the CP length is 1024$\kappa$ $\times$ 2$^{-\mu}$ time units, the subcarrier spacing length is 15 $\times$ 2$^{-\mu}$ kilohertz kHz, the duration of the random access preamble is 2 $\times$ 2048$\kappa$ $\times$ 2$^{-\mu}$ time units, and the duration of the physical random access channel (PRACH) corresponding to the random access preamble is 2 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 4 OFDM symbols;

the CP length is 3072$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 768$\kappa$ $\times$ 2$^{-\mu}$ time units, the subcarrier spacing length is 15 $\times$ 2$^{-\mu}$ kHz, the duration of the random access preamble is 2 $\times$ 2048$\kappa$ $\times$ 2$^{-\mu}$ time units, and the duration of the PRACH corresponding to the random access preamble is 2 OFDM symbols;

the CP length is 1280$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 4 OFDM symbols;

the CP length is 1792$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 3328$\kappa$ $\times$ 2$^{-\mu}$ time units, the subcarrier spacing length is 15 $\times$ 2$^{-\mu}$ kHz, the duration of the random access preamble is 12 $\times$ 2048$\kappa$ $\times$ 2$^{-\mu}$ time units, and the duration of the PRACH corresponding to the random access preamble is 12 OFDM symbols;

the CP length is 1792$\kappa$ $\times$ 2$^{-\mu}$ time units, the subcarrier spacing length is 15 $\times$ 2$^{-\mu}$ kHz, the duration of the random access preamble is 1 $\times$ 2048$\kappa$ $\times$ 2$^{-\mu}$ time units, and the duration of the PRACH corresponding to the random access preamble is 2 OFDM symbols;

the CP length is 3840$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 6 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 12 $\times$ 2048$\kappa$ $\times$ 2$^{-\mu}$ time units, and the duration of the PRACH corresponding to the random access preamble is 12 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 4 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 7 $\times$ 2048$\kappa$ $\times$ 2$^{-\mu}$ time units, and the duration of the PRACH corresponding to the random access preamble is 6 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 13 $\times$ 2048$\kappa$ $\times$ 2$^{-\mu}$ time units, and the duration of the PRACH corresponding to the random access preamble is 12 OFDM symbols;

the CP length is 2048$\kappa$ $\times$ 2$^{-\mu}$ time units, the subcarrier spacing length is 15 $\times$ 2$^{-\mu}$ kHz, the duration of the random access preamble is 5 $\times$ 2048$\kappa$ $\times$ 2$^{-\mu}$ time units, and the duration of the PRACH corresponding to the random access preamble is 6 OFDM symbols;

the CP length is 3072$\kappa$ $\times$ 2$^{-\mu}$ time units, the subcarrier spacing length is 15 $\times$ 2$^{-\mu}$ kHz, the duration of the random access preamble is 11 $\times$ 2048$\kappa$ $\times$ 2$^{-\mu}$ time units, and the duration of the PRACH corresponding to the random access preamble is 11 OFDM symbols;

the CP length is 2816$\kappa$ $\times$ 2$^{-\mu}$ time units, the subcarrier spacing length is 15 $\times$ 2$^{-\mu}$ kHz, the duration of the random access preamble is $10 \times 2048\kappa \times 2^{-\mu}$ time units, and the duration of the PRACH corresponding to the random access preamble is 10 OFDM symbols;

the CP length is $2560\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 9 OFDM symbols;

the CP length is $2304\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 8 OFDM symbols;

the CP length is $2048\kappa \times 2^{-\mu}$ time units, the subcarrier spacing length is $15 \times 2^{-\mu}$ kHz, the duration of the random access preamble is $7 \times 2048\kappa \times 2^{-\mu}$ time units, and the duration of the PRACH corresponding to the random access preamble is 7 OFDM symbols;

the CP length is $2048\kappa \times 2^{-\mu}$ time units, the subcarrier spacing length is $15 \times 2^{-\mu}$ kHz, the duration of the random access preamble is $12 \times 2048\kappa \times 2^{-\mu}$ time units, and the duration of the PRACH corresponding to the random access preamble is 11 OFDM symbols;

the CP length is $1792\kappa \times 2^{-\mu}$ time units, the subcarrier spacing length is $15 \times 2^{-\mu}$ kHz, the duration of the random access preamble is $11 \times 2048\kappa \times 2^{-\mu}$ time units, and the duration of the PRACH corresponding to the random access preamble is 10 OFDM symbols;

the CP length is $1536\kappa \times 2^{-\mu}$ time units, the subcarrier spacing length is $15 \times 2^{-\mu}$ kHz, the duration of the random access preamble is $10 \times 2048\kappa \times 2^{-\mu}$ time units, and the duration of the PRACH corresponding to the random access preamble is 9 OFDM symbols;

the CP length is $1280\kappa \times 2^{-\mu}$ time units, the subcarrier spacing length is $15 \times 2^{-\mu}$ kHz, the duration of the random access preamble is $9 \times 2048\kappa \times 2^{-\mu}$ time units, and the duration of the PRACH corresponding to the random access preamble is 8 OFDM symbols; or

the CP length is $1024\kappa \times 2^{-\mu}$ time units, the subcarrier spacing length is $15 \times 2^{-\mu}$ kHz, the duration of the random access preamble is $8 \times 2048\kappa \times 2^{-\mu}$ time units, and the duration of the PRACH corresponding to the random access preamble is 7 OFDM symbols.

In a possible implementation, the processor 701 is specifically configured to:
when determining that a CP type is an extended cyclic prefix (ECP), determine, in the first parameter set based on the configuration information, the parameter corresponding to the random access preamble.

In a possible implementation, the processor 701 is specifically configured to: when the configuration information includes a first indication, determine that the CP type is the extended cyclic prefix (ECP), and the first indication indicates that a CP type of an initial uplink bandwidth part or an initial downlink bandwidth part is an ECP.

In a possible implementation, the configuration information includes one or more of the following items: the CP length, a preamble sequence length, and the duration of the PRACH corresponding to the random access preamble.

In a possible implementation, any item of the first parameter set further includes a format of the random access preamble, the configuration information further includes a random access configuration index, and the processor 701 is specifically configured to: determine a target format of the random access preamble based on the random access configuration index; and

determine, in the first parameter set based on the target format of the random access preamble, the parameter corresponding to the random access preamble.

In a possible implementation, the any item of the first parameter set further includes the preamble sequence length.

In a possible implementation, the processor 701 is further configured to receive a second indication from the network device through the communication port 702.

The processor 701 is further configured to determine the preamble sequence length based on the second indication.

In a possible implementation, a value of $\kappa$ is 64, 128, 256, or 512.

In a possible implementation, a value of $\mu$ is associated with one or more of the following items:

a carrier frequency of the random access preamble, a random access type, or a frequency type used for the random access preamble.

It should be noted that for content such as an execution process of each component module in the communication apparatus and a plurality of possible implementations of the component module, refer to the descriptions in the foregoing method embodiments of this application. Details are not described herein again. In addition, when the component modules of the communication apparatus in the embodiment shown in FIG. 7 are function modules implemented by software, these software function modules are stored in the memory 703. When the processor 701 executes software code in the memory 703, the communication apparatus is enabled to implement the content executed in FIG. 6. For a specific implementation process, refer to the content in FIG. 6. Details are not described herein again.

In addition, the processor 701 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

An embodiment of this application further provides a computer-readable storage medium, where the computer-readable storage medium includes a computer program or instructions. When the computer-executable instructions are executed by a processor, the processor performs the method according to any possible implementation of the foregoing method embodiments.

An embodiment of this application further provides a computer program product that stores one or more computer-executable instructions. The computer program product includes a computer program or instructions. When the computer program product is executed by a processor, the processor performs the method according to any possible implementation of the foregoing method embodiments.

This application further provides a chip system. The chip system includes a processor and a communication interface. The processor may include a baseband processor (BP). For example, the processor may further include an application processor (AP). The processor is configured to support a communication apparatus in implementing the function according to any possible implementation of the foregoing method embodiments. In a possible design, the chip system may further include a memory. The memory is configured to store a necessary computer program or necessary instructions. The processor executes the computer program or instructions in the memory through the communication interface, to implement the method according to any possible implementation of the foregoing method embodiments. In addition, the chip system may include a chip, or may include a chip and another discrete component.

This application further provides a communication system. The communication system includes a network device that is configured to send configuration information, and the communication apparatus according to any one of the foregoing embodiments.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. All or a part of the units may be selected based on actual requirements to achieve the objectives of the solutions of embodiments.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or a part of the technical solutions may be implemented in a form of a software product. The computer software product is stored in a storage medium and includes several instructions for indicating a computer device (which may be a personal computer, a server, or a network device) to perform all or a part of the steps of the methods described in embodiments of this application. The storage medium includes any medium that can store program code, such as a USB flash drive, a removable hard disk, a read-only memory (ROM), a random access memory (RAM), a magnetic disk, or an optical disc.

**Claims**

1. A communication method, comprising:

   receiving, by a terminal device (10), configuration information from a network device (20);

determining, by the terminal device (10) in a first parameter set based on the configuration information, a parameter corresponding to a random access preamble, wherein
the first parameter set comprises one or more of the following sets:

a cyclic prefix which is referred to as CP length is $1024\kappa \times 2^{-\mu}$ time units, a subcarrier spacing length is $15 \times 2^{-\mu}$ kilohertz kHz, duration of the random access preamble is $2 \times 2048\kappa \times 2^{-\mu}$ time units, and duration of a physical random access channel which is referred to as PRACH corresponding to the random access preamble is $2 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $768\kappa \times 2^{-\mu}$ time units, a subcarrier spacing length is $15 \times 2^{-\mu}$ kHz, duration of the random access preamble is $2 \times 2048\kappa \times 2^{-\mu}$ time units, and duration of a PRACH corresponding to the random access preamble is $2 \times 2560\kappa \times 2^{-\mu}$ time units;

a CP length is $1280\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $4 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $3328\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $12 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access preamble is $1 \times 2048\kappa \times 2^{-\mu}$ time units, and duration of a PRACH corresponding to the random access preamble is $2 \times 2560\kappa \times 2^{-\mu}$ time units;

a CP length is $3840\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $6 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $4 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $6 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $13 \times 2048\kappa \times 2^{-\mu}$ time units, and duration of a PRACH corresponding to the random access preamble is $12 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $5 \times 2048\kappa \times 2^{-\mu}$ time units, and duration of a PRACH corresponding to the random access preamble is $6 \times 2560\kappa \times 2^{-\mu}$ time units;

a CP length is $3072\kappa \times 2^{-\mu}$ time units, a subcarrier spacing length is $15 \times 2^{-\mu}$ kHz, duration of the random access preamble is $11 \times 2048\kappa \times 2^{-\mu}$ time units, and duration of a PRACH corresponding to the random access preamble is $11 \times 2560\kappa \times 2^{-\mu}$ time units;

a CP length is $2816\kappa \times 2^{-\mu}$ time units, a subcarrier spacing length is $15 \times 2^{-\mu}$ kHz, duration of the random access preamble is $10 \times 2048\kappa \times 2^{-\mu}$ time units, and duration of a PRACH corresponding to the random access preamble is $10 \times 2560\kappa \times 2^{-\mu}$ time units;

a CP length is $2560\kappa \times 2^{-\mu}$ time units, a subcarrier spacing length is $15 \times 2^{-\mu}$ kHz, duration of the random access preamble is $9 \times 2048\kappa \times 2^{-\mu}$ time units, and duration of a PRACH corresponding to the random access preamble is $9 \times 2560\kappa \times 2^{-\mu}$ time units;

a CP length is $2304\kappa \times 2^{-\mu}$ time units, a subcarrier spacing length is $15 \times 2^{-\mu}$ kHz, duration of the random access preamble is $8 \times 2048\kappa \times 2^{-\mu}$ time units, and duration of a PRACH corresponding to the random access preamble is $8 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $7 \times 2048\kappa \times 2^{-\mu}$ time units, and duration of a PRACH corresponding to the random access preamble is $7 \times 2560\kappa \times 2^{-\mu}$ time units;

a CP length is $2048\kappa \times 2^{-\mu}$ time units, a subcarrier spacing length is $15 \times 2^{-\mu}$ kHz, duration of the random access preamble is $12 \times 2048\kappa \times 2^{-\mu}$ time units, and duration of a PRACH corresponding to the random access preamble is $11 \times 2560\kappa \times 2^{-\mu}$ time units;

a CP length is $1792\kappa \times 2^{-\mu}$ time units, a subcarrier spacing length is $15 \times 2^{-\mu}$ kHz, duration of the random access preamble is $11 \times 2048\kappa \times 2^{-\mu}$ time units, and duration of a PRACH corresponding to the random access preamble is $10 \times 2560\kappa \times 2^{-\mu}$ time units;

a CP length is $1536\kappa \times 2^{-\mu}$ time units, a subcarrier spacing length is $15 \times 2^{-\mu}$ kHz, duration of the random access preamble is $10 \times 2048\kappa \times 2^{-\mu}$ time units, and duration of a PRACH corresponding to the random access preamble is $9 \times 2560\kappa \times 2^{-\mu}$ time units;

a CP length is $1280\kappa \times 2^{-\mu}$ time units, a subcarrier spacing length is $15 \times 2^{-\mu}$ kHz, duration of the random access preamble is $9 \times 2048\kappa \times 2^{-\mu}$ time units, and duration of a PRACH corresponding to the random access preamble is $8 \times 2560\kappa \times 2^{-\mu}$ time units; or

a CP length is $1024\kappa \times 2^{-\mu}$ time units, a subcarrier spacing length is $15 \times 2^{-\mu}$ kHz, duration of the random access preamble is $8 \times 2048\kappa \times 2^{-\mu}$ time units, and duration of a PRACH corresponding to the random access preamble is $7 \times 2560\kappa \times 2^{-\mu}$ time units, wherein

$\kappa$ is a constant, and $\mu$ is a subcarrier spacing index of the PRACH; and

sending, by the terminal device (10), the random access preamble to the network device (20) based on the parameter corresponding to the random access preamble,

**characterized in that**

the determining, by the terminal device (10) in a first parameter set based on the configuration information, a parameter corresponding to a random access preamble comprises:

when the terminal device (10) determines that a CP type is an extended cyclic prefix which is referred to as ECP, determining, by the terminal device (10) in the first parameter set based on the configuration information, the parameter corresponding to the random access preamble,

when the configuration information comprises a first indication, the terminal device (10) determines that the CP type is the extended cyclic prefix which is referred to as ECP, and the first indication indicates that a CP type of an initial uplink bandwidth part or an initial downlink bandwidth part is an ECP.

2. The method according to any one of claim 1, wherein the configuration information comprises one or more of the following items: the CP length, a preamble sequence length, and the duration of the PRACH corresponding to the random access preamble.

3. The method according to any one of claims 1 to 2, wherein any item of the first parameter set further comprises a format of the random access preamble, the configuration information further comprises a random access configuration index, and the determining, by the terminal device (10) in a first parameter set based on the configuration information, a parameter corresponding to a random access preamble comprises:

determining, by the terminal device (10), a target format of the random access preamble based on the random access configuration index; and

determining, by the terminal device (10) in the first parameter set based on the target format of the random access preamble, the parameter corresponding to the random access preamble.

4. The method according to any one of claims 1 to 3, wherein the any item of the first parameter set further comprises the preamble sequence length.

5. The method according to claim 4, wherein the method further comprises:

receiving, by the terminal device (10), a second indication from the network device (20); and
determining, by the terminal device (10), the preamble sequence length based on the second indication.

6. The method according to any one of claims 1 to 5, wherein a value of $\kappa$ is 64, 128, 256, or 512.

7. The method according to any one of claims 1 to 6, wherein a value of $\mu$ is associated with one or more of the following items:

a carrier frequency of the random access preamble, a random access type, or a frequency type used for the random access preamble.

8. A communication apparatus (600), configured to perform the method according to any one of claims 1 to 7.

9. A computer program product, wherein the computer program product comprises a computer program or instructions; and when the computer program product runs on a computer, the computer is enabled to perform the method according to any one of claims 1 to 7.

10. A computer-readable storage medium, wherein the computer-readable storage medium is configured to store a computer program or instructions; and when the computer program or the instructions are run on a computer, the computer is enabled to perform the method according to any one of claims 1 to 7.

11. A communication system, wherein the communication system comprises:

a network device (20), configured to send configuration information; and
the communication apparatus (600) according to claim 8.

**Patentansprüche**

1. Kommunikationsverfahren, umfassend:

Empfangen, durch eine Endgeräteeinrichtung (10), von Konfigurationsinformationen von einer Netzeinrichtung (20);
Bestimmen, durch die Endgeräteeinrichtung (10) in einem ersten Parametersatz basierend auf den Konfigurationsinformationen, eines Parameters, der einer Direktzugriffspräambel entspricht, wobei
der erste Parametersatz einen oder mehrere der folgenden Sätze umfasst:

ein zyklisches Präfix, das als CP-Länge bezeichnet wird, beträgt $1024\,\kappa \times 2^{-\mu}$ Zeiteinheiten, eine Unterträgerabstandslänge beträgt $15 \times 2^{-\mu}$ Kilohertz, kHz, eine Dauer der Direktzugriffspräambel beträgt $2 \times 2048\,\kappa \times 2^{-\mu}$ Zeiteinheiten und eine Dauer eines physischen Direktzugriffskanals, der als PRACH bezeichnet wird und der Direktzugriffspräambel entspricht, beträgt $2 \times 2560\,\kappa \times 2^{-\mu}$ Zeiteinheiten;
eine CP-Länge beträgt $2048\,\kappa \times 2^{-\mu}$ Zeiteinheiten, eine Unterträgerabstandslänge beträgt $15 \times 2^{-\mu}$ kHz, die Dauer der Direktzugriffspräambel beträgt $4 \times 2048\,\kappa \times 2^{-\mu}$ Zeiteinheiten und die Dauer eines PRACH, welcher der Direktzugriffspräambel entspricht, beträgt $4 \times 2560\,\kappa \times 2^{-\mu}$ Zeiteinheiten;
eine CP-Länge beträgt $3072\,\kappa \times 2^{-\mu}$ Zeiteinheiten, eine Unterträgerabstandslänge beträgt $15 \times 2^{-\mu}$ kHz, die Dauer der Direktzugriffspräambel beträgt $6 \times 2048\,\kappa \times 2^{-\mu}$ Zeiteinheiten und die Dauer eines PRACH, welcher der Direktzugriffspräambel entspricht, beträgt $6 \times 2560\,\kappa \times 2^{-\mu}$ Zeiteinheiten;
eine CP-Länge beträgt $768\,\kappa \times 2^{-\mu}$ Zeiteinheiten, eine Unterträgerabstandslänge beträgt $15 \times 2^{-\mu}$ kHz, die Dauer der Direktzugriffspräambel beträgt $2 \times 2048\,\kappa \times 2^{-\mu}$ Zeiteinheiten und die Dauer eines PRACH, welcher der Direktzugriffspräambel entspricht, beträgt $2 \times 2560\,\kappa \times 2^{-\mu}$ Zeiteinheiten;
eine CP-Länge beträgt $1280\,\kappa \times 2^{-\mu}$ Zeiteinheiten, eine Unterträgerabstandslänge beträgt $15 \times 2^{-\mu}$ kHz, die Dauer der Direktzugriffspräambel beträgt $4 \times 2048\,\kappa \times 2^{-\mu}$ Zeiteinheiten und die Dauer eines PRACH, welcher der Direktzugriffspräambel entspricht, beträgt $4 \times 2560\,\kappa \times 2^{-\mu}$ Zeiteinheiten;
eine CP-Länge beträgt $1792\,\kappa \times 2^{-\mu}$ Zeiteinheiten, eine Unterträgerabstandslänge beträgt $15 \times 2^{-\mu}$ kHz, die Dauer der Direktzugriffspräambel beträgt $6 \times 2048\,\kappa \times 2^{-\mu}$ Zeiteinheiten und die Dauer eines PRACH, welcher der Direktzugriffspräambel entspricht, beträgt $6 \times 2560\,\kappa \times 2^{-\mu}$ Zeiteinheiten;
eine CP-Länge beträgt $3328\,\kappa \times 2^{-\mu}$ Zeiteinheiten, eine Unterträgerabstandslänge beträgt $15 \times 2^{-\mu}$ kHz, die Dauer der Direktzugriffspräambel beträgt $12 \times 2048\,\kappa \times 2^{-\mu}$ Zeiteinheiten und die Dauer eines PRACH, welcher der Direktzugriffspräambel entspricht, beträgt $12 \times 2560\,\kappa \times 2^{-\mu}$ Zeiteinheiten;
eine CP-Länge beträgt $1792\,\kappa \times 2^{-\mu}$ Zeiteinheiten, eine Unterträgerabstandslänge beträgt $15 \times 2^{-\mu}$ kHz, die Dauer der Direktzugriffspräambel beträgt $1 \times 2048\,\kappa \times 2^{-\mu}$ Zeiteinheiten und die Dauer eines PRACH, welcher der Direktzugriffspräambel entspricht, beträgt $2 \times 2560\,\kappa \times 2^{-\mu}$ Zeiteinheiten;

eine CP-Länge beträgt 3840 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 4 $\times$ 2048 $\kappa \times 2^{-\mu}$ Zeiteinheiten und die Dauer eines PRACH, welcher der Direktzugriffspräambel entspricht, beträgt 6 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 6 $\times$ 2048 $\kappa \times 2^{-\mu}$ Zeiteinheiten und die Dauer eines PRACH, welcher der Direktzugriffspräambel entspricht, beträgt 6 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 12 $\times$ 2048 $\kappa \times 2^{-\mu}$ Zeiteinheiten und die Dauer eines PRACH, welcher der Direktzugriffspräambel entspricht, beträgt 12 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 4 $\times$ 2048 $\kappa \times 2^{-\mu}$ Zeiteinheiten und die Dauer eines PRACH, welcher der Direktzugriffspräambel entspricht, beträgt 6 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 7 $\times$ 2048 $\kappa \times 2^{-\mu}$ Zeiteinheiten und die Dauer eines PRACH, welcher der Direktzugriffspräambel entspricht, beträgt 6 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 13 $\times$ 2048 $\kappa \times 2^{-\mu}$ Zeiteinheiten und die Dauer eines PRACH, welcher der Direktzugriffspräambel entspricht, beträgt 12 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 5 $\times$ 2048 $\kappa \times 2^{-\mu}$ Zeiteinheiten und die Dauer eines PRACH, welcher der Direktzugriffspräambel entspricht, beträgt 6 $\times$ 2560 $\kappa \times 2^{-\mu}$ Zeiteinheiten;

eine CP-Länge beträgt 3072 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 11 $\times$ 2048 $\kappa \times 2^{-\mu}$ Zeiteinheiten und die Dauer eines PRACH, welcher der Direktzugriffspräambel entspricht, beträgt 11 $\times$ 2560 $\kappa \times 2^{-\mu}$ Zeiteinheiten;

eine CP-Länge beträgt 2816 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 10 $\times$ 2048 $\kappa \times 2^{-\mu}$ Zeiteinheiten und die Dauer eines PRACH, welcher der Direktzugriffspräambel entspricht, beträgt 10 $\times$ 2560 $\kappa \times 2^{-\mu}$ Zeiteinheiten;

eine CP-Länge beträgt 2560 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 9 $\times$ 2048 $\kappa \times 2^{-\mu}$ Zeiteinheiten und die Dauer eines PRACH, welcher der Direktzugriffspräambel entspricht, beträgt 9 $\times$ 2560 $\kappa \times 2^{-\mu}$ Zeiteinheiten;

eine CP-Länge beträgt 2304 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 8 $\times$ 2048 $\kappa \times 2^{-\mu}$ Zeiteinheiten und die Dauer eines PRACH, welcher der Direktzugriffspräambel entspricht, beträgt 8 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 7 $\times$ 2048 $\kappa \times 2^{-\mu}$ Zeiteinheiten und die Dauer eines PRACH, welcher der Direktzugriffspräambel entspricht, beträgt 7 $\times$ 2560 $\kappa \times 2^{-\mu}$ Zeiteinheiten;

eine CP-Länge beträgt 2048 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 12 $\times$ 2048 $\kappa \times 2^{-\mu}$ Zeiteinheiten und die Dauer eines PRACH, welcher der Direktzugriffspräambel entspricht, beträgt 11 $\times$ 2560 $\kappa \times 2^{-\mu}$ Zeiteinheiten;

eine CP-Länge beträgt 1792 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 11 $\times$ 2048 $\kappa \times 2^{-\mu}$ Zeiteinheiten und die Dauer eines PRACH, welcher der Direktzugriffspräambel entspricht, beträgt 10 $\times$ 2560 $\kappa \times 2^{-\mu}$ Zeiteinheiten;

eine CP-Länge beträgt 1536 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 10 $\times$ 2048 $\kappa \times 2^{-\mu}$ Zeiteinheiten und die Dauer eines PRACH, welcher der Direktzugriffspräambel entspricht, beträgt 9 $\times$ 2560 $\kappa \times 2^{-\mu}$ Zeiteinheiten;

eine CP-Länge beträgt 1280 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 9 $\times$ 2048 $\kappa \times 2^{-\mu}$ Zeiteinheiten und die Dauer eines PRACH, welcher der Direktzugriffspräambel entspricht, beträgt 8 $\times$ 2560 $\kappa \times 2^{-\mu}$ Zeiteinheiten; oder eine CP-Länge beträgt 1024 $\kappa \times 2^{-\mu}$ Zeiteinheiten, eine Unterträgerabstandslänge beträgt 15 $\times 2^{-\mu}$ kHz, die Dauer der Direktzugriffspräambel beträgt 8 $\times$ 2048 $\kappa \times 2^{-\mu}$ Zeiteinheiten und die Dauer eines PRACH. welcher der Direktzugriffspräambel entspricht, beträgt 7 $\times$ 2560 $\kappa \times 2^{-\mu}$ Zeiteinheiten, wobei

$\kappa$ eine Konstante ist und $\mu$ ein Unterträgerabstandsindex des PRACH ist; und

Senden, durch die Endgeräteeinrichtung (10), der Direktzugriffspräambel an die Netzeinrichtung (20) basierend auf dem Parameter, welcher der Direktzugriffspräambel entspricht,

**dadurch gekennzeichnet, dass**

das Bestimmen, durch die Endgeräteeinrichtung (10) in einem ersten Parametersatz basierend auf den Konfigurationsinformationen, eines Parameters, der einer Direktzugriffspräambel entspricht, Folgendes umfasst:

wenn die Endgeräteeinrichtung (10) bestimmt, dass eine CP-Art ein erweitertes zyklisches Präfix ist, das als ECP bezeichnet wird, Bestimmen, durch die Endgeräteeinrichtung (10) in dem ersten Parametersatz basierend auf den Konfigurationsinformationen, des Parameters, welcher der Direktzugriffspräambel entspricht,

wenn die Konfigurationsinformationen eine erste Angabe umfassen, die Endgeräteeinrichtung (10) bestimmt, dass die CP-Art das erweiterte zyklische Präfix ist, das als ECP bezeichnet wird, und die erste Angabe angibt, dass eine CP-Art eines anfänglichen Uplink-Bandbreitenteils oder eines anfänglichen Downlink-Bandbreitenteils ein ECP ist.

2. Verfahren nach Anspruch 1, wobei die Konfigurationsinformationen eines oder mehrere der folgenden Elemente umfassen: der CP-Länge, einer Präambelsequenzlänge und der Dauer des PRACH, welcher der Direktzugriffspräambel entspricht.

3. Verfahren nach einem der Ansprüche 1 bis 2, wobei ein beliebiges Element des ersten Parametersatzes ferner ein Format der Direktzugriffspräambel umfasst, die Konfigurationsinformationen ferner einen Direktzugriffskonfigurationsindex umfassen und das Bestimmen, durch die Endgeräteeinrichtung (10) in einem ersten Parametersatz basierend auf den Konfigurationsinformationen, eines Parameters, der einer Direktzugriffspräambel entspricht, Folgendes umfasst:

Bestimmen, durch die Endgeräteeinrichtung (10), eines Zielformats der Direktzugriffspräambel basierend auf dem Direktzugriffskonfigurationsindex; und
Bestimmen, durch die Endgeräteeinrichtung (10) in dem ersten Parametersatz basierend auf dem Zielformat der Direktzugriffspräambel, des Parameters, welcher der Direktzugriffspräambel entspricht.

4. Verfahren nach einem der Ansprüche 1 bis 3, wobei das beliebige Element des ersten Parametersatzes ferner die Präambelsequenzlänge umfasst.

5. Verfahren nach Anspruch 4, wobei das Verfahren ferner Folgendes umfasst:

Empfangen, durch die Endgeräteeinrichtung (10), einer zweiten Angabe von der Netzeinrichtung (20); und
Bestimmen, durch die Endgeräteeinrichtung (10), der Präambelsequenzlänge basierend auf der zweiten Angabe.

6. Verfahren nach einem der Ansprüche 1 bis 5, wobei ein Wert von $\kappa$ 64, 128, 256 oder 512 beträgt.

7. Verfahren nach einem der Ansprüche 1 bis 6, wobei ein Wert von $\mu$ einem oder mehreren der folgenden Elemente zugeordnet ist:
einer Trägerfrequenz der Direktzugriffspräambel, einer Direktzugriffsart oder einer Frequenzart, die für die Direktzugriffspräambel verwendet wird.

8. Kommunikationsvorrichtung (600), die dazu konfiguriert ist, das Verfahren nach einem der Ansprüche 1 bis 7 durchzuführen.

9. Computerprogrammprodukt, wobei das Computerprogrammprodukt ein Computerprogramm oder Anweisungen umfasst; und, wenn das Computerprogrammprodukt auf einem Computer läuft, es dem Computer ermöglicht wird, das Verfahren nach einem der Ansprüche 1 bis 7 durchzuführen.

10. Computerlesbares Speichermedium, wobei das computerlesbare Speichermedium dazu konfiguriert ist, ein Computerprogramm oder Anweisungen zu speichern; und, wenn das Computerprogramm oder die Anweisungen auf einem Computer laufen, es dem Computer ermöglicht wird, das Verfahren nach einem der Ansprüche 1 bis 7 durchzuführen.

11. Kommunikationssystem, wobei das Kommunikationssystem Folgendes umfasst:

eine Netzeinrichtung (20), die dazu konfiguriert ist, Konfigurationsinformationen zu senden; und
die Kommunikationsvorrichtung (600) nach Anspruch 8.

**Revendications**

1. Procédé de communication, comprenant :

   la réception, par un dispositif terminal (10), d'informations de configuration provenant d'un dispositif réseau (20) ;
   la détermination, par le dispositif terminal (10) dans un premier ensemble de paramètres sur la base des informations de configuration, d'un paramètre correspondant à un préambule d'accès aléatoire, dans lequel le premier ensemble de paramètres comprend l'un ou plusieurs des ensembles suivants :

   un préfixe cyclique appelé longueur de CP est de $1024\kappa \times 2^{-\mu}$ unités de temps, une longueur d'espacement de sous-porteuse est de $15 \times 2^{-\mu}$ kilohertz kHz, la durée du préambule d'accès aléatoire est de $2 \times 2048\kappa \times 2^{-\mu}$ unités de temps, et la durée d'un canal d'accès aléatoire physique appelé PRACH correspondant au préambule d'accès aléatoire est de $2 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $4 \times 2048\kappa \times 2^{-\mu}$ unités de temps, et la durée d'un PRACH correspondant au préambule d'accès aléatoire est de $4 \times 2560\kappa \times 2^{-\mu}$ unités de temps ;
   une longueur de CP est de $3072\kappa \times 2^{-\mu}$ unités de temps, une longueur d'espacement de sous-porteuse est de $15 \times 2^{-\mu}$ kHz, la durée du préambule d'accès aléatoire est de $6 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $768\kappa \times 2^{-\mu}$ unités de temps, une longueur d'espacement de sous-porteuse est de $15 \times 2^{-\mu}$ kHz, la durée du préambule d'accès aléatoire est de $2 \times 2048\kappa \times 2^{-\mu}$ unités de temps, et la durée d'un PRACH correspondant au préambule d'accès aléatoire est de $2 \times 2560\kappa \times 2^{-\mu}$ unités de temps ;
   une longueur de CP est de $1280\kappa \times 2^{-\mu}$ unités de temps, une longueur d'espacement de sous-porteuse est de $15 \times 2^{-\mu}$ kHz, la durée du préambule d'accès aléatoire est de $4 \times 2048\kappa \times 2^{-\mu}$ unités de temps, et la durée d'un PRACH correspondant au préambule d'accès aléatoire est de $4 \times 2560\kappa \times 2^{-\mu}$ unités de temps ;
   une longueur de CP est de $1792\kappa \times 2^{-\mu}$ unités de temps, une longueur d'espacement de sous-porteuse est de $15 \times 2^{-\mu}$ kHz, la durée du préambule d'accès aléatoire est de $6 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $3328\kappa \times 2^{-\mu}$ unités de temps, une longueur d'espacement de sous-porteuse est de $15 \times 2^{-\mu}$ kHz, la durée du préambule d'accès aléatoire est de $12 \times 2048\kappa \times 2^{-\mu}$ unités de temps, et la durée d'un PRACH correspondant au préambule d'accès aléatoire est de $12 \times 2560\kappa \times 2^{-\mu}$ unités de temps ;
   une longueur de CP est de $1792\kappa \times 2^{-\mu}$ unités de temps, une longueur d'espacement de sous-porteuse est de $15 \times 2^{-\mu}$ kHz, la durée du préambule d'accès aléatoire est de $1 \times 2048\kappa \times 2^{-\mu}$ unités de temps, et la durée d'un PRACH correspondant au préambule d'accès aléatoire est de $2 \times 2560\kappa \times 2^{-\mu}$ unités de temps ;
   une longueur de CP est de $3840\kappa \times 2^{-\mu}$ unités de temps, une longueur d'espacement de sous-porteuse est de $15 \times 2^{-\mu}$ kHz, la durée du préambule d'accès aléatoire est de $4 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $6 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $12 \times 2048\kappa \times 2^{-\mu}$ unités de temps, et la durée d'un PRACH correspondant au préambule d'accès aléatoire est de $12 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $4 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $7 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $13 \times 2048\kappa \times 2^{-\mu}$ unités de temps, et la durée d'un PRACH correspondant au préambule d'accès aléatoire est de $12 \times 2560\kappa \times 2^{-\mu}$ unités de temps ;
   une longueur de CP est de $2048\kappa \times 2^{-\mu}$ unités de temps, une longueur d'espacement de sous-porteuse est de $15 \times 2^{-\mu}$ kHz, la durée du préambule d'accès aléatoire est de $5 \times 2048\kappa \times 2^{-\mu}$ unités de temps, et la durée d'un PRACH correspondant au préambule d'accès aléatoire est de $6 \times 2560\kappa \times 2^{-\mu}$ unités de temps ;
   une longueur de CP est de $3072\kappa \times 2^{-\mu}$ unités de temps, une longueur d'espacement de sous-porteuse est de $15 \times 2^{-\mu}$ kHz, la durée du préambule d'accès aléatoire est de $11 \times 2048\kappa \times 2^{-\mu}$ unités de temps, et la durée d'un PRACH correspondant au préambule d'accès aléatoire est de $11 \times 2560\kappa \times 2^{-\mu}$ unités de temps ;

une longueur de CP est de 2816κ × 2$^{-\mu}$ unités de temps, une longueur d'espacement de sous-porteuse est de 15 × 2$^{-\mu}$ kHz, la durée du préambule d'accès aléatoire est de 10 × 2048κ × 2$^{-\mu}$ unités de temps, et la durée d'un PRACH correspondant au préambule d'accès aléatoire est de 10 × 2560κ × 2$^{-\mu}$ unités de temps ;

une longueur de CP est de 2560κ × 2$^{-\mu}$ unités de temps, une longueur d'espacement de sous-porteuse est de 15 × 2$^{-\mu}$ kHz, la durée du préambule d'accès aléatoire est de 9 × 2048κ × 2$^{-\mu}$ unités de temps, et la durée d'un PRACH correspondant au préambule d'accès aléatoire est de 9 × 2560κ × 2$^{-\mu}$ unités de temps ;

une longueur de CP est de 2304κ × 2$^{-\mu}$ unités de temps, une longueur d'espacement de sous-porteuse est de 15 × 2$^{-\mu}$ kHz, la durée du préambule d'accès aléatoire est de 8 × 2048κ × 2$^{-\mu}$ unités de temps, et la durée d'un PRACH correspondant au préambule d'accès aléatoire est de 8 × 2560κ × 2$^{-\mu}$ unités de temps ;

une longueur de CP est de 2048κ × 2$^{-\mu}$ unités de temps, une longueur d'espacement de sous-porteuse est de 15 × 2$^{-\mu}$ kHz, la durée du préambule d'accès aléatoire est de 7 × 2048κ × 2$^{-\mu}$ unités de temps, et la durée d'un PRACH correspondant au préambule d'accès aléatoire est de 7 × 2560κ × 2$^{-\mu}$ unités de temps ;

une longueur de CP est de 2048κ × 2$^{-\mu}$ unités de temps, une longueur d'espacement de sous-porteuse est de 15 × 2$^{-\mu}$ kHz, la durée du préambule d'accès aléatoire est de 12 × 2048κ × 2$^{-\mu}$ unités de temps, et la durée d'un PRACH correspondant au préambule d'accès aléatoire est de 11 × 2560κ × 2$^{-\mu}$ unités de temps ;

une longueur de CP est de 1792κ × 2$^{-\mu}$ unités de temps, une longueur d'espacement de sous-porteuse est de 15 × 2$^{-\mu}$ kHz, la durée du préambule d'accès aléatoire est de 11 × 2048κ × 2$^{-\mu}$ unités de temps, et la durée d'un PRACH correspondant au préambule d'accès aléatoire est de 10 × 2560κ × 2$^{-\mu}$ unités de temps ;

une longueur de CP est de 1536κ × 2$^{-\mu}$ unités de temps, une longueur d'espacement de sous-porteuse est de 15 × 2$^{-\mu}$ kHz, la durée du préambule d'accès aléatoire est de 10 × 2048κ × 2$^{-\mu}$ unités de temps, et la durée d'un PRACH correspondant au préambule d'accès aléatoire est de 9 × 2560κ × 2$^{-\mu}$ unités de temps ;

une longueur de CP est de 1280κ × 2$^{-\mu}$ unités de temps, une longueur d'espacement de sous-porteuse est de 15 × 2$^{-\mu}$ kHz, la durée du préambule d'accès aléatoire est de 9 × 2048κ × 2$^{-\mu}$ unités de temps, et la durée d'un PRACH correspondant au préambule d'accès aléatoire est de 8 × 2560κ × 2$^{-\mu}$ unités de temps ; ou

une longueur d'espacement de sous-porteuse est de 15 × 2$^{-\mu}$ kHz, la durée du préambule d'accès aléatoire est de 8 × 2048κ × 2$^{-\mu}$ unités de temps, et la durée d'un PRACH correspondant au préambule d'accès aléatoire est de 7 × 2560κ × 2$^{-\mu}$ unités de temps, dans lequel

κ est une constante, et μ est un indice d'espacement de sous-porteuses du PRACH ; et

l'envoi, par le dispositif terminal (10), du préambule d'accès aléatoire au dispositif réseau (20) sur la base du paramètre correspondant au préambule d'accès aléatoire,

**caractérisé en ce que**

la détermination, par le dispositif terminal (10) dans un premier ensemble de paramètres sur la base des informations de configuration, d'un paramètre correspondant à un préambule d'accès aléatoire comprend :

lorsque le dispositif terminal (10) détermine qu'un type de CP est un préfixe cyclique prolongé appelé ECP, la détermination, par le dispositif terminal (10) dans le premier ensemble de paramètres sur la base des informations de configuration, du paramètre correspondant au préambule d'accès aléatoire, lorsque les informations de configuration comprennent une première indication, le dispositif terminal (10) détermine que le type de CP est le préfixe cyclique prolongé qui est appelé ECP, et les premières indications indiquent qu'un type de CP d'une partie de bande passante de liaison montante initiale ou d'une partie de bande passante de liaison descendante initiale est un ECP.

2. Procédé selon l'une quelconque de la revendication 1, dans lequel les informations de configuration comprennent l'un ou plusieurs des éléments suivants : la longueur de CP, une longueur de séquence de préambule, et la durée du PRACH correspondant au préambule d'accès aléatoire.

3. Procédé selon l'une quelconque des revendications 1 et 2, dans lequel un quelconque élément du premier ensemble de paramètres comprend également un format du préambule d'accès aléatoire, les informations de configuration comprennent également un index de configuration d'accès aléatoire, et la détermination, par le dispositif terminal (10) dans un premier ensemble de paramètres sur la base des informations de configuration, d'un paramètre correspondant à un préambule d'accès aléatoire comprend :

la détermination, par le dispositif terminal (10), d'un format cible du préambule d'accès aléatoire sur la base de l'index de configuration d'accès aléatoire ; et

la détermination, par le dispositif terminal (10) dans le premier ensemble de paramètres sur la base du format cible du préambule d'accès aléatoire, du paramètre correspondant au préambule d'accès aléatoire.

4. Procédé selon l'une quelconque des revendications 1 à 3, dans lequel l'élément quelconque du premier ensemble de paramètres comprend également la longueur de la séquence de préambule.

5. Procédé selon la revendication 4, dans lequel le procédé comprend également :

la réception, par le dispositif terminal (10), de secondes indications provenant du dispositif réseau (20) ; et
la détermination, par le dispositif terminal (10), de la longueur de la séquence de préambule sur la base des secondes indications.

6. Procédé selon l'une quelconque des revendications 1 à 5, dans lequel une valeur de $\kappa$ est 64, 128, 256, ou 512.

7. Procédé selon l'une quelconque des revendications 1 à 6, dans lequel une valeur de $\mu$ est associée à l'un ou plusieurs des éléments suivants :
une fréquence porteuse du préambule d'accès aléatoire, un type d'accès aléatoire, ou un type de fréquence utilisé pour le préambule d'accès aléatoire.

8. Appareil de communication (600), configuré pour réaliser le procédé selon l'une quelconque des revendications 1 à 7.

9. Produit de programme informatique, dans lequel le produit de programme informatique comprend un programme informatique ou des instructions ; et lorsque le produit de programme informatique est exécuté sur un ordinateur, l'ordinateur est activé pour réaliser le procédé selon l'une quelconque des revendications 1 à 7.

10. Support de stockage lisible par ordinateur, dans lequel le support de stockage lisible par ordinateur est configuré pour stocker un programme informatique ou des instructions ; et lorsque le programme informatique ou les instructions sont exécutés sur un ordinateur, l'ordinateur est activé pour réaliser le procédé selon l'une quelconque des revendications 1 à 7.

11. Système de communication, dans lequel le système de communication comprend :

un dispositif réseau (20), configuré pour envoyer des informations de configuration ; et
l'appareil de communication (600) selon la revendication 8.

Network device

Network device
(backhaul node)

UE

FIG. 1

Terminal device (10)

Antenna
(1033)

Signal transceiver unit
(103)

Processor
(101)

Transmitter
1031

Memory
(102)

Computer program or
configuration information

Receiver
1032

FIG. 2

FIG. 3

```
┌──────────────┐                              ┌──────────────────┐
│      UE      │                              │   Base station   │
└──────────────┘                              └──────────────────┘
        │                                               │
        │   1. Obtain a synchronization signal,         │
        │      system information, random access        │
        │      configuration information, and/or        │
        │      the like                                 │
        │←──────────────────────────────────────────────│
        │   2. The UE determines and sends a Msg 1       │
        │      (which may be retransmitted)             │
        │- - - - - - - - - - - - - - - - - - - - - - - →│
        │                                               │
        │──────────────────────────────────────────────→│
        │                                               │
        │                                               │
        │                                    3. Msg 2    │
        │←──────────────────────────────────────────────│
        │   4. The UE sends a Msg 3 (which may be        │
        │      retransmitted, and the UE receives        │
        │      DCI information scheduled and              │
        │      retransmitted by the base station)        │
        │- - - - - - - - - - - - - - - - - - - - - - - →│
        │←- - - - - - - - - - - - - - - - - - - - - - - │
        │──────────────────────────────────────────────→│
        │   5. Msg 4 (which is initially transmitted     │
        │      or retransmitted, and UE feedback         │
        │      information)                              │
        │←- - - - - - - - - - - - - - - - - - - - - - - │
        │- - - - - - - - - - - - - - - - - - - - - - - →│
        │←──────────────────────────────────────────────│
        │──────────────────────────────────────────────→│
        │                                               │
```

FIG. 4

Terminal device

Network device

501: Send configuration information

502: Determine, in a first parameter set based on the configuration information, a parameter corresponding to a random access preamble

503: Send the random access preamble based on the parameter corresponding to the random access preamble and the configuration information

FIG. 5

600

Communication apparatus

601

Transceiver unit

602

Processing unit

FIG. 6

700

Communication apparatus

702

Communication
port

701

Processor

704

703

Memory

FIG. 7

**EP 4 124 146 B1**

**Patent documents cited in the description**

- US 2017367120 A1
- CN 109246831 A
- CN 110392443 A
- US 2019274172 A1